# EUROPEAN PATENT SPECIFICATION

(11) **EP 3 041 682 B1**
(45) Date of publication and mention of the grant of the patent: **19.02.2020**
(21) Application number: 14841666.2
(22) Date of filing: 29.08.2014
(51) Int. Cl.: B41J 2/14, B41J 2/045

(54) **INKJET RECORDING METHOD AND INKJET RECORDING DEVICE**
TINTENSTRAHLAUFZEICHNUNGSVERFAHREN UND TINTENSTRAHLAUFZEICHNUNGSVORRICHTUNG
PROCÉDÉ D'IMPRESSION À JET D'ENCRE ET DISPOSITIF D'IMPRESSION À JET D'ENCRE

(30) Priority: 03.09.2013 JP 2013182293; 04.09.2013 JP 2013183341; 10.07.2014 JP 2014141986
(43) Date of publication of application: 13.07.2016
(73) Proprietor: Ricoh Company, Ltd., Tokyo 143-8555 (JP)
(72) Inventor: MASUDA, Kiminori, Tokyo 143-8555 (JP); KOJIMA, Mariko, Tokyo 143-8555 (JP); BANNAI, Akiko, Tokyo 143-8555 (JP); TAMAI, Takashi, Tokyo 143-8555 (JP); KITAOKA, Naoko, Tokyo 143-8555 (JP); KOHDA, Tomohiko, Tokyo 1438-555 (JP)
(74) Representative: Lamb, Martin John Carstairs
(86) International application number: PCT/JP2014/073416
(87) International publication number: WO 2015/034027

(56) References cited:
- JP-A- H0 929 970
- JP-A- H0 929 970
- JP-A- 2006 168 296
- JP-A- 2011 020 280
- JP-A- 2014 195 986
- US-A1- 2009 130 313
- US-A1- 2009 130 313

## Description

### Technical Field

The present invention relates to an inkjet recording method and an inkjet recording device.

### Background Art

An inkjet recording system is a recording system in which ink droplets are ejected from very minute nozzles to deposit on a recording medium, to thereby form characters or an image. This system has been recently widely used because formation of a full-color image is easier compared to other recording systems, and a high resolution image can be obtained even with a device having a simple configuration.

An ink used in the inkjet recording system requires different properties. In particular, ejection stability upon ejection of the ink from a head is an important factor that determines image quality.

An ink composition used in the inkjet recording system generally contains a colorant, a wetting agent, and water. Conventionally, a water-soluble dye has been used as the colorant for the ink used in the inkjet recording system from the viewpoint of high image quality, a wide range of types of available colorants, and excellent ejection stability due to its high water solubility. However, the water-soluble dye is poorer in water resistance and weather resistance than a pigment. As a result, printed matter printed with the water-soluble dye is also poor in water resistance and weather resistance. Therefore, recently, an ink containing, as the colorant, a pigment which is better in water solubility and weather resistance than the water-soluble dye has been primarily used in stead of the water-soluble dye.

In the inkjet recording system, ink droplets are ejected by applying fluctuating voltage to an ink.

A meniscus is formed inside a nozzle of a head filled with the ink. In a normal (static) state, the meniscus forms a bridge from a nozzle edge toward a liquid chamber side. However, when positive pressure is applied to the ink in the nozzle due to voltage fluctuation upon ejection, the meniscus is broken, potentially leading to overflow of the ink from an outlet. Additionally, an ejected ink droplet may be torn off, or fine ink mist produced through scatter of ink droplets impacted on a substrate to be printed may deposit on a nozzle plate. The ink overflowed from the outlet or the ink mist deposited on a surface of the nozzle plate in the above described manner forms an ink puddle on the nozzle plate. When the ink puddle is brought into contact with ink droplet ejected, the meniscus turns into an asymmetric form or the ink droplet is pulled toward the ink puddle, potentially leading to deflection of an ejection direction. In an ink containing, as the colorant, the pigment described above, the pigment in the solid form is dispersed in a solvent unlike the water-soluble dye which is fully dissolved in a solvent. Therefore, when the ink deposited on the surface of the nozzle plate is dried, the pigment in the solid form adheres to the surface of the nozzle plate, eventually leading to a clogged nozzle.

Thus, in the inkjet recording system, keeping a periphery of the nozzle clean is important for ensuring stable ejection. Therefore, in order to prevent the surface of the nozzle plate from being smeared with the ink, a maintenance work has generally been performed including applying a water-repellent film onto the surface of the nozzle plate to thereby make the surface be ink-repellent and periodically wiping the surface of the nozzle plate to thereby remove the ink on the surface of the nozzle plate.

However, the water-repellent film has been known to be gradually peeled off from the nozzle plate by the action of the wiping.

Therefore, there has been proposed a method for improving durability of the water-repellent film in order to prevent deterioration thereof (e.g., see PTL 1).

However, the above proposed method cannot prevent the water-repellent film from being peeled off to a certain extent. Therefore, at an area at which the water-repellent film has been peeled off, image quality is deteriorated by tendency for the ink to adhere thereto, ejection disturbance, ejection deflection, and streaks on printed matter, which is problematic. Depending on properties of the ink, the nozzle surface has lowered ink-repellency and the ink cannot be sufficiently removed even through the wiping, which is also problematic.

For the purpose of stably ejecting an ink and providing a sharp image with little blur, there has been proposed an inkjet recording ink which contains self-dispersing colorant particles, and which has the static surface tension of 30 mN/m to 50 mN/m, the advancing contact angle of 65° or more and the receding contact angle of 55° or more on the nozzle plate surface of the recording head, and a difference between the advancing contact angle and the receding contact angle of 20° or less (e.g., PTL 2).

However, in this proposed ink, ejection stability cannot be ensured in the case of low static surface tension, which is problematic.

PTL 3 proposes a method for improving ejection reliability by shortening an entire drive waveform within one printing cycle to thereby increase the printing speed, and forming an ejection pulse including a waveform element corresponding to size of ink droplets.

PTL 4 proposes an inkjet recording head which allows a pigment ink located on a surface of a nozzle plate to be fully removed with a wiping unit by defining a difference between the advancing contact angle and the receding contact angle of the pigment ink on the surface of the nozzle plate in the inkjet recording head.

PTL 5 proposes an inkjet recording head which allows an ink to jet accurately and stably by defining the advancing contact angle and the receding contact angle of the ink on a surface of a nozzle plate.

PTL 6 proposes an inkjet recording head which has a high liquid-repellency by defining a relationship (the receding contact angle of the ink) between the inkjet recording head and a liquid-repellent treatment agent for liquid-repellent treating an end face of the inkjet recording head provided with an ink outlet.

However, these proposals have a problem that a water-repellent film formed on a surface of a nozzle plate is gradually peeled off under the influence of the wiping.

Therefore, in the present, there is a need to provide an inkjet recording method which allows an ink having a low static surface tension and a large receding contact angle to eject stably and which achieves an excellent image even when a water-repellent film formed onto a surface of a nozzle plate is deteriorated.

### Citation List

### Patent Literature

PTL 1: Japanese Patent Application Laid-Open (JP-A) No. 2010-76422
PTL 2: JP-A No. 2003-277651
PTL 3: JP-A No. 2011-62821
PTL 4: JP-A No. 10-34941
PTL 5: JP-A No. 04-35344
PTL 6: JP-A No. 04-241948

JP 2011020280 discloses a liquid delivering apparatus which suppreses the occurrence of mist when a highly viscous liquid is delivered.

### Summary of Invention

### Technical Problem

An object of the present invention is to provide an inkjet recording method which allows an ink having a low static surface tension and a large receding contact angle to eject stably and which achieves an excellent image.

### Solution to Problem

The invention is directed to an inkjet recording method according to claim 1 and an inkjet device according to claim 7.

### Advantageous Effects of Invention

The present invention can solve the above existing problems and provide an inkjet recording method which allows an ink having a low static surface tension and a large receding contact angle to eject stably and which achieves an excellent image.

### Brief Description of Drawings

FIG. 1 is a SEM image illustrating a deteriorated water-repellent film on a surface of a nozzle plate.
FIG. 2 is a schematic diagram illustrating a normal meniscus.
FIG. 3 is a schematic diagram illustrating a state in which meniscus overflow is occurred immediately after droplets are ejected.
FIG. 4 is a schematic diagram illustrating a state in which ink droplet deflection is occurred.
FIG. 5A is a schematic diagram illustrating a state in which a meniscus overflow is occurred by a normal ejection.
FIG. 5B is a graph illustrating a signal in the state illustrated in FIG. 5A.
FIG. 6A is a schematic diagram illustrating a state in which an ink overflowed by a normal ejection remains on a deteriorated water-repellent film.
FIG. 6B is a graph illustrating a signal in the state illustrated in FIG. 6A.
FIG. 7A is a schematic diagram illustrating a state in which ink droplet deflection is occurred by a normal ejection.
FIG. 7B is a graph illustrating a signal in the state illustrated in FIG. 7A.
FIG. 8A is a schematic diagram illustrating a state in which a meniscus overflow is occurred.
FIG. 8B is a graph illustrating a signal in the state illustrated in FIG. 8A.
FIG. 9A is a schematic diagram illustrating a state in which a meniscus is pulled into a nozzle in the first step.
FIG. 9B is a graph illustrating a signal in the state illustrated in FIG. 9A.
FIG. 10A is a schematic diagram illustrating a state in which an ink 202 in a nozzle and an ink 202 on a deteriorated water-repellent film 200 coalesce together.
FIG. 10B is a graph illustrating a signal in the state illustrated in FIG. 10A.
FIG. 11A is a schematic diagram illustrating a state in which a meniscus is pulled into a nozzle in the second step.
FIG. 11B is a graph illustrating a signal in the state illustrated in FIG. 11A.
FIG. 12A is a schematic diagram illustrating a state in which an ink 202 is ejected.
FIG. 12B is a graph illustrating a signal in the state illustrated in FIG. 12A.
FIG. 13 is a side view illustrating one exemplary entire configuration of an inkjet recording device of the present invention.
FIG. 14 is a plan view of essential parts illustrating one exemplary an entire configuration of an inkjet recording device of the present invention.
FIG. 15 is a cross-sectional diagram along a longitudinal direction of a liquid chamber illustrating one exemplary liquid ejecting head constituting a recording head of an inkjet recording device of the present invention.
FIG. 16 is a cross-sectional diagram along a transverse direction of a liquid chamber illustrating one exemplary liquid ejecting head constituting a recording head of an inkjet recording device of the present invention.
FIG. 17 is a schematic block diagram illustrating one exemplary control section of an inkjet recording device of the present invention.
FIG. 18 is a block diagram illustrating one exemplary printing control section and head driver of an inkjet recording device of the present invention.
FIG. 19 is a graph illustrating an ejection waveform including a driving signal for pulling a meniscus into a nozzle in a two-step manner.
FIG. 20 is a graph illustrating an ejection waveform including a driving signal for pulling a meniscus into a nozzle in a one-step manner.
FIG. 21 is a diagram illustrating one printing unit cycle.
FIG. 22 is a schematic diagram illustrating one exemplary ink cartridge.
FIG. 23 is a schematic diagram illustrating the ink cartridge including a case shown in FIG. 22.

### Description of Embodiments

### (Inkjet recording method and inkjet recording device)

An inkjet recording method of the present invention is performed by an inkjet recording device including a nozzle plate provided with a nozzle configured to eject droplets of an ink; a recording head including a liquid chamber with which the nozzle is in communication, and a pressure generating unit configured to generate pressure in the liquid chamber; and a signal generating unit configured to generate a signal to be applied to the pressure generating unit.

The inkjet recording method allows the droplets of the ink to eject by the action of the pressure which is generated by the pressure generating unit according to the signal.

In the inkjet recording method, the ink has a static surface tension of 18.0 mN/m to 27.0 mN/m at 25°C.

In the inkjet recording method, the ink has a receding contact angle of 50° or more on the nozzle plate.

In the inkjet recording method, the signal has a two-step pull pulse for pulling the ink into the nozzle in a two-step manner within one printing unit cycle.

The inkjet recording method includes pulling the ink located in proximity to a nozzle outlet into the nozzle by the action of the two-step pull pulse, to thereby form a meniscus at a predetermined position.

An inkjet recording device includes a nozzle plate provided with a nozzle configured to eject droplets of an ink; a recording head including the nozzle configured to eject the droplets of the ink, a liquid chamber with which the nozzle is in communication, and a pressure generating unit configured to generate pressure in the liquid chamber; and a signal generating unit configured to generate a signal to be applied to the pressure generating unit.

The inkjet recording device allows the droplets of the ink to eject by the action of the pressure which is generated by the pressure generating unit according to the signal.

In the inkjet recording device, the ink has a static surface tension of 18.0 mN/m to 27.0 mN/m at 25°C.

In the inkjet recording device, the ink has a receding contact angle of 50° or more on the nozzle plate.

In the inkjet recording device, the signal has a two-step pull pulse for pulling the ink into the nozzle in a two-step manner within one printing unit cycle.

The inkjet recording device allows the ink located in proximity to a nozzle outlet to be pulled into the nozzle by the action of the two-step pull pulse, to thereby form a meniscus at a predetermined position.

The liquid ejection head is formed by stacking a flow channel plate, an oscillation plate joined to a lower surface of the flow channel plate, and a nozzle plate joined to an upper surface of the flow channel plate to thereby form a nozzle including an opening (nozzle opening) configured to eject droplets (ink droplets). The nozzle configured to eject droplets (ink droplets) connects to a nozzle communication path, a pressure chamber serving as a pressure generating chamber, and an ink supply port in communication with a common liquid chamber for supplying ink to the pressure chamber via a fluid resistor section (fluid supply path).

That is, the liquid ejection head includes the pressure chamber in communication with the nozzle opening configured to eject the ink droplets, and a pressure generating element configured to allow the pressure to fluctuate in the pressure chamber.

On the nozzle plate, the nozzles (nozzle opening) are formed corresponding to the pressure chamber. The nozzle plate is formed of, for example, a nozzle forming member (e.g., a metal member), and is preferably those in which a water-repellent layer (water-repellent film) is formed on an outermost surface of the nozzle forming member. That is, a surface of the nozzle (nozzle opening) is preferably subjected to a water-repellent treatment.

The term "in proximity to a nozzle outlet" means a periphery of the nozzle opening.

The term "liquid ejection head" is synonymous with "inkjet recording head" and hereinafter may be referred to simply as "head."

In the inkjet recording method of the present invention, a drive signal generating unit generates an ejection pulse corresponding to the size of the ink droplets. The ejection pulse is constituted by selecting a drive pulse from a drive waveform including one or more time-series drive pulses.

Notably, the term "drive pulse" means a pulse serving as an element constituting a drive waveform. The term "ejection pulse" means a pulse applied to a liquid ejection head equipped with a pressure generating element to thereby eject liquid droplets.

The drive pulse includes an expanding waveform element which is a waveform element configured to fall from a reference potential to a predetermine hold potential to thereby expand the pressure chamber; a holding element which is a waveform element configured to hold the fallen potential (hold potential); and a contracting waveform element which is a waveform element configured to raise from the hold potential to thereby contract the pressure chamber.

Depending on the size of the ink droplet, the ejection pulse is generated by selecting a drive pulse from a drive waveform including one or more time-series drive pulses. For example, drive pulses allowing droplets having three different sizes (i.e., large droplets, medium droplets, and small droplets) to eject can be selected.

The term "predetermined position" used in the phrase "form a meniscus at a predetermined position" means a regular position at which a meniscus is formed, that is, a position at which a meniscus is formed in a concave manner from a reference plane when viewed from a cross section of the opening on the nozzle plate.

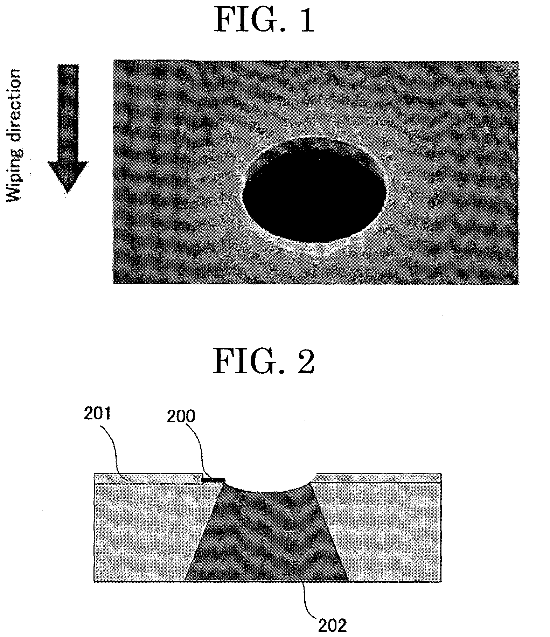

As illustrated in a SEM (Scanning Electron Microscope) image in FIG. 1, the water-repellent film on a surface of the nozzle plate opposite to a surface facing the liquid chamber is gradually deteriorated due to a physical load applied during a maintenance work.

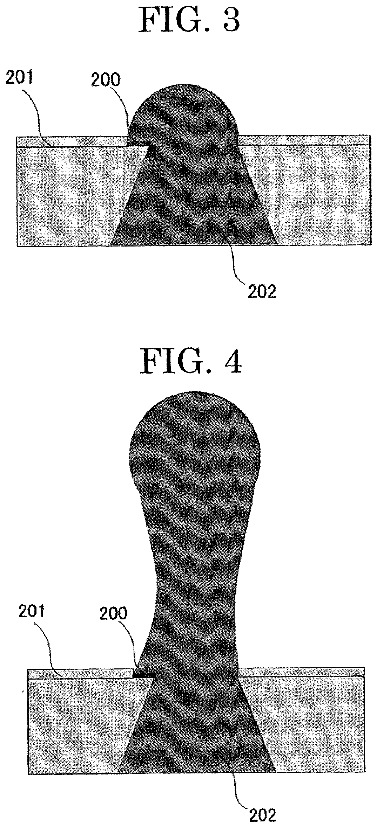

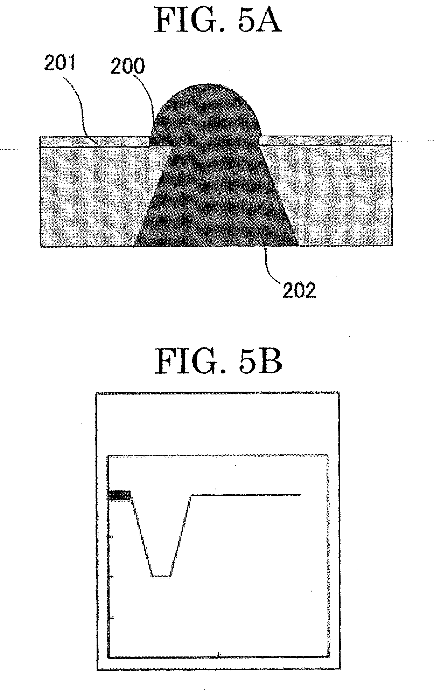

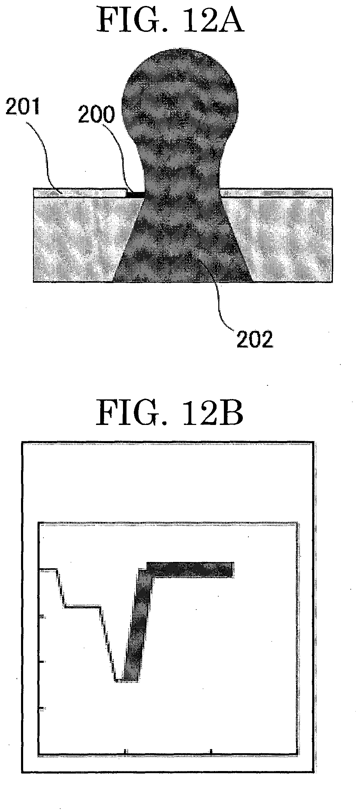

A meniscus is originally formed in a nozzle of a head which is filled with an ink. In a normal (static) state, the meniscus forms a bridge from a nozzle edge toward a liquid chamber side, so that the ink is less affected by a deteriorated water-repellent film on the nozzle (see FIG. 2). In FIG. 2, the reference sign 200 denotes a deteriorated water-repellent film, the reference sign 201 denotes a water-repellent film, and the reference sign 202 denotes an ink. The above described reference signs also have the same meanings in FIGs. 3 to 12. In graphs of FIGs. 5B to 12B, portions indicated by bold lines in signal waveforms correspond to signals applied in states shown in the figures, respectively. In each of graphs of FIGs. 5B to 12B, a horizontal axis represents the time and a vertical axis represents the voltage.

However, as shown in FIGs. 3 and 4, when the ink overflows outward from the nozzle after droplets of the ink 202 are ejected, such as in a meniscus overflow or a meniscus overflow immediately after high-frequency drive, the meniscus turns into an asymmetric form under the influence of the deteriorated water-repellent film (see FIG. 3). The meniscus overflow means a phenomenon in which the ink overflows from the nozzle with excessive momentum when the ink droplets are ejected. This is because an outflow of the ink from the nozzle causes an inflow of the ink from the common liquid chamber into the nozzle, but the inflow of the ink cannot be stopped immediately after the completion of the ejection. In particular, a waveform for ejecting large droplets within one printing unit cycle (a large amount of the ink is injected per unit time) causes a great meniscus overflow. The meniscus over flow immediately after high-frequency drive means a phenomenon in which the ink overflows from the nozzle with excessive momentum when a large amount of the ink is ejected by the action of high-frequency drive. This is because an outflow of the ink from the nozzle causes an inflow of the ink from the common liquid chamber into the nozzle, but the inflow of the ink cannot be stopped immediately after the completion of the ejection. In this case, there is a refill period Rf which is different from a natural oscillation period Tc of the liquid chamber. Then, subsequent droplets are ejected in the state in which the meniscus is in the asymmetric form, which causes the droplets to deflect from the original direction (see FIG. 4).

As shown in FIGs. 5A to 7B, in the case of using a conventional ejection pulse, when the ink is ejected in the state in which the meniscus overflow has been occurred, the ink overflowed onto the deteriorated water-repellent film is not sufficiently pulled into the nozzle, so that the overflowed ink remains on the deteriorated water-repellent film even immediately before the droplets are injected. Accordingly, the droplets are caused to deflect from the original direction.

Notably, FIGs. 5B, 6B, and 7B represent signals in the states illustrated in FIGs. 5A, 6A, and 7A, respectively.

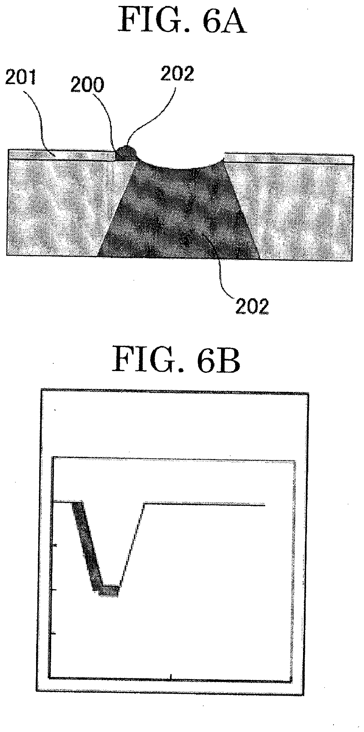

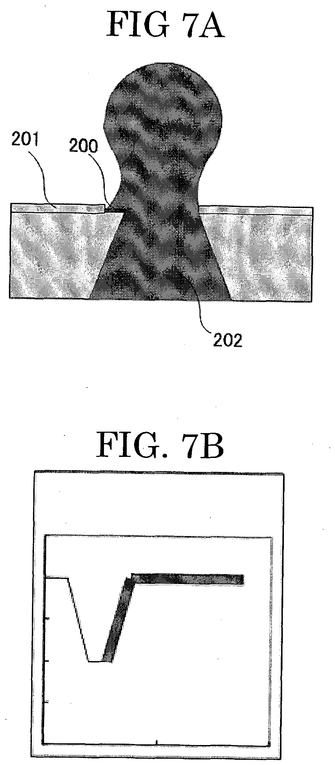

As described below in more detail, when the meniscus is pulled into the nozzle by applying a pulse in the state in which the meniscus overflow has been occurred (see FIG. 5A), the ink 202 partially remains on the deteriorated water-repellent film 200 as illustrated in FIG. 6A. When the subsequent ink 202 is ejected by applying the ejection pulse for ejecting the ink 202 from the nozzle in the state in which the ink 202 remains on the deteriorated water-repellent film 200, the ink 202 remaining on the deteriorated water-repellent film 200 coalesces with the subsequent ink 202. As a result, as illustrated in FIG. 7A, the droplet of the ink is caused to deflect from the original direction.

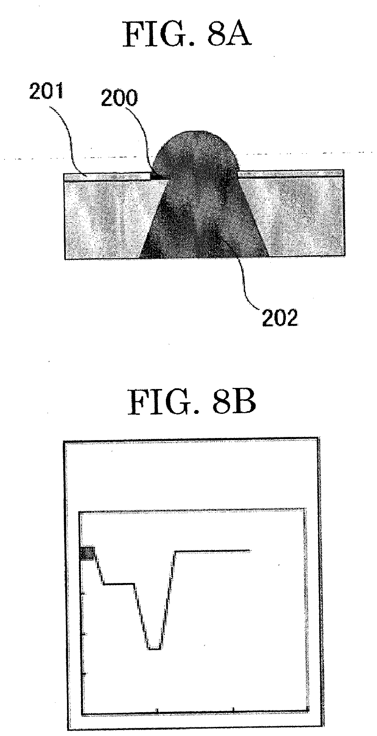

On the other hand, in the present invention, as illustrated in FIGs. 8A to 12B, the meniscus is pulled into the nozzle in a two-step manner, so that no ink 202 remains on the deteriorated water-repellent film 200. Therefore, the droplet of the ink can be prevented from deflecting from the original direction.

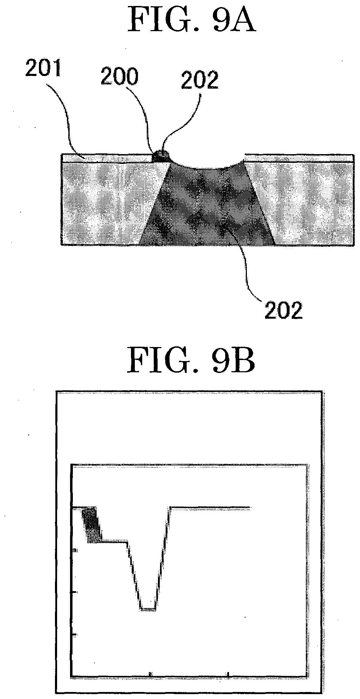

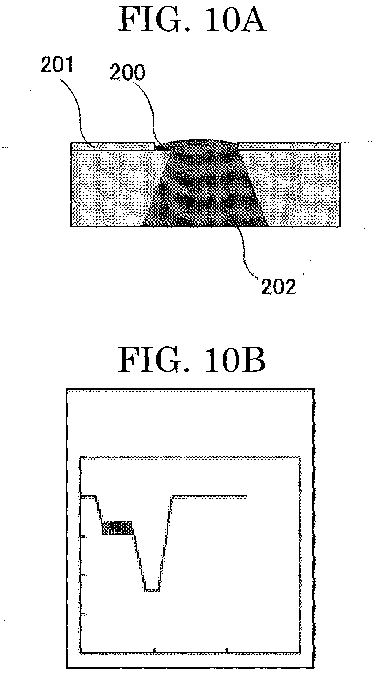

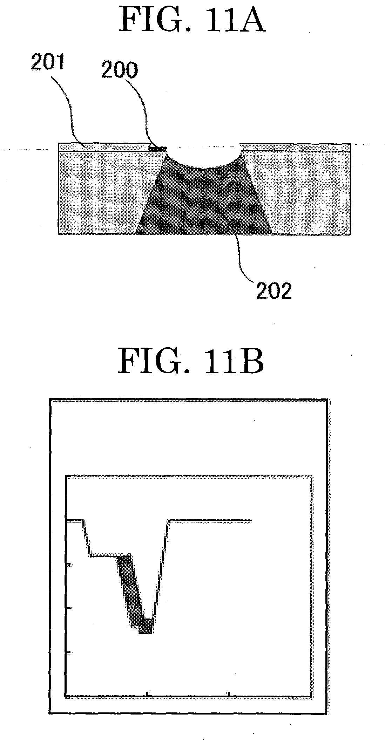

As described below in detail, when the meniscus is pulled into the nozzle by applying a pulse in the state in which the meniscus overflow has been occurred (see FIG. 8A), as the first step, the meniscus is pulled into the nozzle by applying a relatively small pulse (see FIG. 9B), so that the ink 202 remains on the deteriorated water-repellent film 200 (see FIG. 9A). Thereafter, the pulse is kept at the same amplitude as the first step (see Fig 10B). As a result, the ink 202 within the nozzle coalesces with the ink 202 remaining on the deteriorated water-repellent film 200 (see FIG. 10A). Then, as the second step, the meniscus is pulled into the nozzle by applying a pulse which is relatively larger than the pulse in the first step (see FIG. 11B). As a result, the meniscus can be pulled into the nozzle without allowing the ink 202 to remain on the deteriorated water-repellent film 200 (see FIG. 11A). When the ink 202 is ejected by applying the ejection pulse (see FIG. 12B) in this state, the droplet of the ink can be prevented from deflecting from the original direction (see FIG. 12A).

Notably, as used herein, the term "pulse" means a signal which sharply changes in a short time.

Each of stepwise pulses illustrated in FIGs. 9B, 10B, and 11B represents a pull pulse.

An ink used in the present invention has the low static surface tension of 18.0 mN/m to 27.0 mN/m at 25°C. After the ink is impacted on a recording medium, the ink wets and spreads on the recording medium well and rapidly penetrates into the recording medium. Accordingly, the ink tends to achieve excellent color development and high image quality. However, the ink also easily wets and spreads on a surface of the nozzle, making it difficult to ensure continuous ejection stability.

The ink has the receding contact angle on the nozzle plate of 50° or more. The ink having such a large receding contact angle is easily released from the surface of the nozzle. That is, even when the ink overflows onto the surface of the nozzle, the overflowed droplets are released from the surface following the subsequently ejected droplets, which is advantageous for the ejection stability.

Therefore, the ink easily wets and spreads on, and, at the same time, easily released from the surface of the nozzle, so that only a part of the spread ink droplets follows the subsequently ejected droplets and the residual part of the ink droplet which is spread away from the nozzle opening disadvantageously remains on the surface of the nozzle plate. As a result, the residual ink gradually accumulates, which finally adversely affects the ejection.

A means for controlling the receding contact angle to 50° or more is not particularly limited and may be appropriately selected depending on the intended purpose. For example, the receding contact angle can be decreased by increasing an amount of a surfactant and a penetrating agent added to the ink, by changing a surfactant to those having a higher ability to reduce the surface tension, or by decreasing water-repellency of the water-repellent film on the nozzle plate.

According to the present invention, the meniscus is pulled into the nozzle in the two-step manner by applying the pull pulse, so that even the ink which has spread away from the nozzle opening can pulled into the meniscus two times. Therefore, almost all of the overflowed ink is collected. As a result, the ejection is less adversely affected and an excellent image can be obtained.

According to the present invention, an inkjet recording method which allows an ink having a low static surface tension and a large receding contact angle to eject stably and which achieves an excellent image can be provided. The inkjet recording method exhibits a remarkable effect especially in the case where a water-repellent film on a nozzle plate is deteriorated.

In the signal within one printing unit cycle, the pull pulse is preferably present prior to the ejection pulse for ejecting the ink.

As used herein, the term "one printing unit cycle" means a time interval for which each dot is formed on a medium by each actuator.

The "one printing unit cycle" includes a step of applying the ejection pulse and a step of pulling the ink in a two-step manner.

The "one printing unit cycle" has been described in JP-A Nos. 2001-146011, 10-81012, and 2011-062821 in detail.

For example, JP-A No. 10-81012 describes an inkjet recording device which ejects a plurality of ink droplets from each nozzle of an inkjet head within the one printing unit cycle for which one dot is formed on a recording medium to thereby form one dot from the plurality of ink droplets.

The inkjet recording device includes an inkjet head including a head main body provided with a pressure chamber for housing an ink and a nozzle in communication with the pressure chamber, an actuator configured to apply the pressure to the ink housed in the pressure chamber so that ink droplets are ejected from the nozzle by a piezoelectric effect of a piezoelectric element, and a driving signal supplying unit configured to supply a driving signal to the actuator; and a relative moving unit configured to relatively move the inkjet head and a recording medium to each other.

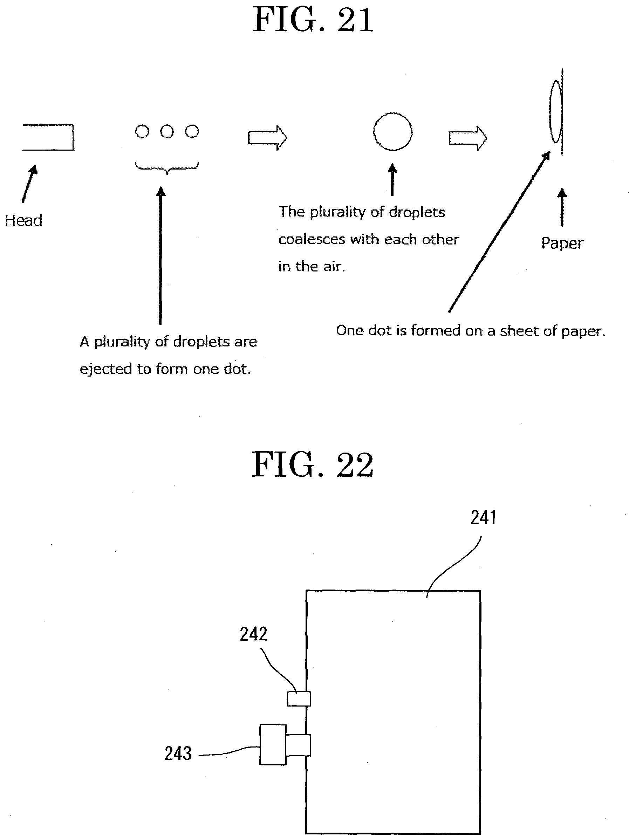

As illustrated in FIG. 21, while the relative moving unit relatively moves the inkjet head and the recording medium to each other, the driving signal supplying unit supplies to the actuator the driving signal including a plurality of (i.e., one or two or more) drive pulses within the one printing unit cycle to thereby eject a plurality of (i.e., one or two or more) ink droplets from the nozzle.

The plurality of ink droplets ejected in the above-described manner form one dot on the recording medium.

A plurality of the dots is arranged on the recording medium to thereby form a predetermined image on the recording medium.

The dots are adjusted in shade of color or size by adjusting the number of the ink droplets ejected within the one printing unit cycle, which allows for a so-called multi-gradation printing.

In the present invention, the following configurations are preferable. In the first configuration, droplets ejected within the one printing unit cycle are allowed to coalesce with each other in the air, and then be deposited on the recording medium. In the second configuration, droplets ejected within the one printing unit cycle are sequentially deposited on the recording medium in the order of ejection. In the third configuration, only one droplet is deposited on the recording medium. All of these three configurations are available. Preferable is the first configuration in which droplets ejected within the one printing unit cycle are allowed to coalesce with each other in the air, and then be deposited on the recording medium, because the ink has a nearly circular shape when the ink is impacted on the recording medium, and the ink is impacted at the accurate position on the recording medium.

### <Ink>

The ink has the static surface tension of 18.0 mN/m to 27.0 mN/m at 25°C.

The ink has the receding contact angle on the nozzle plate of 50° or more.

The static surface tension of 18.0 mN/m to 27.0 mN/m is advantageous in terms of bleeding on a recording medium and ejection stability.

In the case where the receding contact angle is 50° or more, even when the ink is once deposited on an inner wall surface of an ink chamber in the head, the ink can be easily re-released from the inner wall surface. Notably, the upper limit of the receding contact angle is not particularly limited in terms of wettability because the larger the receding contact angle is, the more difficult it is for the ink to wet the recording medium. However, the receding contact angle is preferably up to 80° (80° or less) in view of penetrability into the recording medium.

The static surface tension can be measured with an automatic tensiometer (CBVP-Z, manufactured by Kyowa Interface Science Co., Ltd) using a platinum plate method.

The receding contact angle can be measured with an automatic contact angle meter. The automatic contact angle meter may be OCA200H (manufactured by Data Physics Corporation). The receding contact angle can be measured as follows. Onto an outer surface of the nozzle used in the present invention, 3 µL of an ink is ejected from a syringe, following by subjecting to a measurement with the automatic contact angle meter using a contraction method. The "receding contact angle," as used herein, means a value as measured at 25°C.

The ink contains, for example, water, a colorant, a surfactant, and a water-soluble organic solvent; and, if necessary, further contains other components.

### <<Colorant>>

The colorant may be a dye or a pigment, but is preferably the pigment from the viewpoints of water resistance and lightfastness of printed matter. Examples of the pigment include an organic pigment and an inorganic pigment. These may be used alone or in combination.

Examples of the organic pigment include azo-based pigments, phthalocyanine-based pigments, anthraquinone-based pigments, dioxazine-based pigments, indigo-based pigments, thioindigo-based pigments, perylene-based pigments, isoindolinone-based pigments, aniline black, azomethine-based pigments and rhodamine B lake pigments.

Examples of the inorganic pigment include carbon black, iron oxide, titanium oxide, calcium carbonate, barium sulfate, aluminum hydroxide, barium yellow, iron blue, cadmium red, chrome yellow and metal powder.

Specific examples of black pigments include carbon blacks (C. I. Pigment Black 7) such as furnace black, lamp black, acetylene black, and channel black; metals such as copper oxides, iron oxides (C. I. Pigment Black 11), and titanium oxide; and organic pigments such as aniline black (C. I. Pigment Black 1).

Specific examples of yellow pigments include C. I. Pigment Yellow 1 (Fast Yellow G), 2, 3, 12 (Disazo Yellow AAA), 13, 14, 16, 17, 20, 23, 24, 34, 35, 37, 42 (yellow iron oxide), 53, 55, 73, 74, 75, 81, 83 (Disazo Yellow HR), 86, 93, 95, 97, 98, 100, 101, 104, 108, 109, 110, 114, 117, 120, 125, 128, 129, 137, 138, 139, 147, 148, 150, 151, 153, 154, 155, 166, 168, 180, and 185.

Specific examples of magenta pigments include C. I. Pigment Violet 19, and C. I. Pigment Red 1, 2, 3, 5, 7, 9, 12, 17, 22 (Brilliant Fast Scarlet), 23, 31, 38, 48:1 [Permanent Red 2B (Ba)], 48:2 [Permanent Red 2B (Ca)], 48:3 [Permanent Red 2B (Sr)], 48:4 [Permanent Red 2B (Mn)], 49:1, 52:2, 53:1, 57:1 (Brilliant Carmine 6B), 60:1, 63:1, 63:2, 64:1, 81 (Rhodamine 6G Lake), 83, 88, 92, 97, 101 (iron oxide red), 104, 105, 106, 108 (cadmium red), 112, 114, 122 (dimethylquinacridone), 123, 146, 149, 166, 168, 170, 172, 175, 176, 178, 179, 180, 184, 185, 190, 192, 193, 202, 209, 215, 216, 217, 219, 220, 223, 226, 227, 228, 238, 240, 254, 255, and 272.

Specific examples of cyan pigments include C. I. Pigment Blue 1, 2, 3, 15 (Copper Phthalocyanine Blue R), 15:1, 15:2, 15:3 (Phthalocyanine Blue G), 15:4, 15:6 (Phthalocyanine Blue E), 16, 17:1, 22, 56, 60, 63, and 64, Vat Blue 4, and Vat Blue 60.

Specific examples of pigments for intermediate colors, i.e., red, green, and blue, include C. I. Pigment Red 177, 194, and 224, C. I. Pigment Orange 16, 36, 43, 51, 55, 59, 61, and 71, C. I. Pigment Violet 3, 19, 23, 29, 30, 37, 40, and 50 and C. I. Pigment Green 7 and 36.

The ink used in the present invention may contain, as the colorant, polymer particles containing a hydrophobic dye or pigment in order to improve printing density and printing durability. The polymer particles are used in the form of a dispersion. More preferably, the dispersion of the polymer particles contains the pigment, in particular, the organic pigment or carbon black. Examples of a polymer used for the dispersion of the polymer particles containing the pigment include a vinyl-based polymer, a polyester-based polymer, and a polyurethane-based polymer. Among them, preferable is the vinyl-based polymer.

The vinyl-based polymer is preferably a polymer obtained by copolymerizing a monomer composition containing (a) one or more vinyl-based monomers selected from the group consisting of ester acrylate, ester methacrylate, and a styrene-based monomer; (b) a polymerizable unsaturated monomer containing a salt-forming group; and (c) a component copolymerizable with the vinyl-based monomers and the polymerizable unsaturated monomer containing a salt-forming group.

Examples of the vinyl-based monomers in (a) include ester acrylates such as methyl acrylate, ethyl acrylate, isopropyl acrylate, n-butyl acrylate, t-butyl acrylate, isobutyl acrylate, n-amyl acrylate, n-hexyl acrylate, n-octyl acrylate, and dodecyl acrylate; ester methacrylates such as methyl methacrylate, isopropyl methacrylate, n-butyl methacrylate, t-butyl methacrylate, isobutyl methacrylate, n-amyl methacrylate, 2-ethylhexyl methacrylate, and lauryl methacrylate; styrene-based monomers such as styrene, vinyltoluene, and 2-methyl styrene. There may be used alone or in combination.

Examples of the polymerizable unsaturated monomer containing a salt-forming group in (b) include a cationic monomer containing a salt-forming group, and an anionic monomer containing a salt-forming group.

Examples of the cationic monomer containing a salt-forming group include a tertiary amine-containing unsaturated monomer and an ammonium salt-containing unsaturated monomer. Preferable examples thereof include N,N-dimethylaminoethyl acrylate, N-(N',N'-dimethylaminoethyl)acrylamide, vinyl pyridine, 2-methyl-5-vinylpyridine, dimethylaminoethyl methacrylate, and diethylaminoethyl methacrylate.

Examples of the anionic monomer containing a salt-forming group include an unsaturated carboxylate monomer, an unsaturated sulfonate monomer, and an unsaturated phosphate monomer. Preferable examples thereof include acrylic acid, methacrylic acid, itaconic acid, maleic acid, and fumaric acid.

Examples of the component copolymerizable with the vinyl-based monomers and the polymerizable unsaturated monomer containing a salt-forming group in (c) include an acrylic amide-based monomer, a methacrylic amide-based monomer, a hydroxyl group-containing monomer, and a macromer containing one terminal polymerizable functional group.

Examples of the macromer containing one terminal polymerizable functional group include a silicone macromer, a styrene-based macromer, a polyester-based macromer, a polyurethane-based macromer, a polyalkylether macromer, a macromer represented by General Formula: CH₂=C(R⁵)COO(R⁶O)ₚR⁷ (where R⁵ denotes a hydrogen atom or a lower alkyl group, R⁶ denotes a C1 to C30 divalent hydrocarbon group which may contain a hetero atom, R⁷ denotes a hydrogen atom or a C1 to C30 monovalent hydrocarbon group which may contain a hetero atom, and p denotes an integer of 1 to 60). These may be used alone or in combination. Notably, these monomers are given by way of example only without being limited thereto. Example of the lower alkyl group includes a C1 to C4 alkyl group.

Examples of the hydroxyl group-containing monomer include 2-hydroxyethyl acrylate and 2-hydroxyethyl methacrylate.

Preferable examples of the macromer represented by CH₂=C(R⁵)COO(R⁶O)ₚR⁷ include polyethylene glycol (2 to 30) (meth)acrylate and methoxypolyethylene glycol (1 to 30) (meth)acrylate. Notably, as used herein, the term "(meth)acrylate" means acrylate or methacrylate.

Among the copolymerizable components, the macromers are preferable, and the silicone-based macromer, the styrene-based macromer, and the polyalkylether macromer are more preferable.

An amount of the vinyl-based monomer contained in the monomer composition is not particularly limited and may be appropriately selected depending on the intended purpose, but is preferably 1% by mass to 75% by mass, more preferably 5% by mass to 60% by mass, particularly preferably 10% by mass to 50% by mass, from the viewpoint of improving dispersion stability of polymer emulsion.

An amount of the polymerizable unsaturated monomer containing a salt-forming group contained in the monomer composition is not particularly limited and may be appropriately selected depending on the intended purpose, but is preferably 2% by mass to 40% by mass, more preferably 5% by mass to 20% by mass, from the viewpoint of improving dispersion stability of polymer emulsion.

An amount of the monomer copolymerizable with the vinyl-based monomer and the polymerizable unsaturated monomer containing a salt-forming group contained in the monomer composition is not particularly limited and may be appropriately selected depending on the intended purpose, but is preferably 5% by mass to 90% by mass, more preferably 10% by mass to 85% by mass, particularly preferably 20% by mass to 60% by mass, from the viewpoint of improving dispersion stability of polymer emulsion.

An average particle diameter of the polymer particles is preferably 20 nm to 200 nm from the viewpoint of dispersion stability.

An amount of the polymer particles contained in the ink is preferably 10% by mass to 40% by mass.

Notably, the average particle diameter refers to a 50% average particle diameter (D50) measured on a sample which is diluted with pure water to a pigment concentration of 0.01% by mass, using MICROTRAC UPA-150 (manufactured by NIKKISO CO., LTD.) at 23°C under the conditions of a particle refractive index of 1.51, a particle density of 1.4 g/cm³ and a pure water parameter as a solvent parameter.

### <<Surfactant>>

Preferable surfactants are those having low surface tension, high penetrability, and high leveling property without impairing dispersion stability of the colorant depending on types of the colorant or combinations with the water-soluble organic solvent.

The surfactant is preferably at least one selected from the group consisting of an anionic surfactant, a nonionic surfactant, a silicone surfactant, and a fluorosurfactant. Among them, the silicone surfactant and the fluorosurfactant are particularly preferable. These surfactants may be used in combination.

The fluorosurfactant are preferably those in which 2 to 16 carbon atoms are substituted with fluorine atoms, more preferably those in which 4 to 16 carbon atoms are substituted with fluorine atoms. When less than 2 carbon atoms are substituted with fluorine atoms, fluorine may exhibit its function insufficiently. When more than 16 carbon atoms are substituted with fluorine atoms, the resulting ink may have a problem in storability.

Examples of the fluorosurfactant include a perfluoroalkyl sulfonic acid compound, a perfluoroalkyl carboxylic acid compound, a perfluoroalkyl phosphate ester compound, perfluoroalkyl ethylene oxide adduct, and a polyoxyalkylene ether polymer compound containing a perfluoroalkyl ether group in a side chain thereof. Among them, particularly preferable is the polyoxyalkylene ether polymer compound containing a perfluoroalkyl ether group in a side chain thereof from the viewpoint of low foamability.

Further preferable fluorosurfactant is a fluorosurfactant represented by the following General Formula (I):

CₙF₂ₙ₊₁-CH₂CH(OH)CH₂-O-(CH₂CH₂O)ₐ-Y' ··· General Formula (I)

In the general formula (I), n denotes an integer of 2 to 6, a denotes an integer of 15 to 50, and Y' denotes -C_{b}H_{2b+1} (where b denotes an integer of 11 to 19) or -CH₂CH(OH)CH₂-C_{d}F_{2d+1} (where d denotes an integer of 2 to 6).

The fluorosurfactant may be appropriately synthesized, or may be commercially available products. Examples of the commercially available products include FS-300 (manufactured by Du Pont Kabushiki Kaisha), FT-110, FT-250, FT-251, FT-400S, FT-150, and FT-400SW (manufactured by NEOS COMPANY LIMITED), and POLYFOX PF-151N (manufactured by Omnova Solutions, Inc.) because these can achieve good printing quality, particularly color developability, and can significantly improve uniform dye-affinity for paper.

Suitable specific examples of the fluorosurfactant include those shown below:
(1) Anionic fluorosurfactant 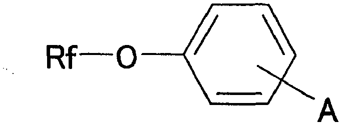
   In the above formula, Rf denotes a mixture of fluorine-containing hydrophobic groups represented by the following formula; and A denotes -SO₃X, -COOX, or -PO₃X (where X denotes a counter anion, specifically a hydrogen atom, Li, Na, K, NH₄, NH₃CH₂CH₂OH, NH₂(CH₂CH₂OH)₂, and NH(CH₂CH₂OH)₃). 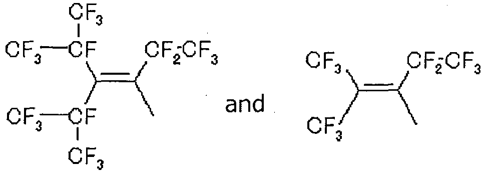 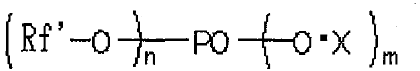
   In the above formula, Rf denotes a fluorine-containing group represented by the following formula, X denotes the same as described above, n denotes an integer of 1 or 2, and m denotes 2-n. 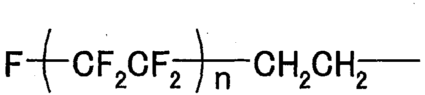
   In the above formula, n denotes an integer of 3 to 10.

   Rf'-S-CH₂-COO▪X

   In the above formula, Rf and X each denotes the same as described above.

   Rf'-SO₃▪X

   In the above formula, Rf and X each denotes the same as described above.
(2) Nonionic Fluorosurfactant 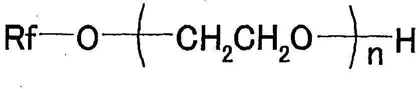
   In the above formula, Rf denotes the same as described above, and n denotes an integer of 5 to 20. 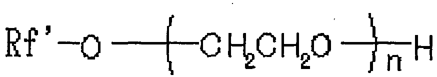
   In the above formula, Rf denotes the same as described above, and n denotes an integer of 1 to 40.

   CF₃CF₂(CF₂CF₂)ₘ-CH₂CH₂O(CH₂CH₂O)ₙH

   In the above formula, m denotes an integer of 0 to 10, and n denotes an integer of 0 to 40.
(3) Amphoteric Fluorosurfactant 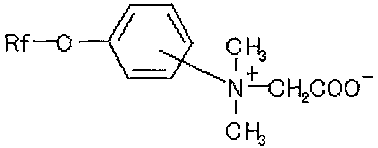
   In the above formula, Rf denotes the same as described above.
(4) Oligomer Fluorosurfactant

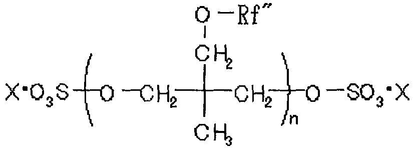

In the above formula, Rf" denotes a fluorine-containing group represented by the following formula, n denotes an integer of 1 to 10, and X denotes the same as described above.

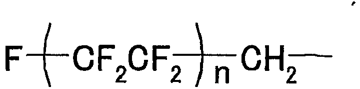

In the above formula, n denotes an integer of 1 to 4.

The silicone surfactant is not particularly limited and may be appropriately selected depending on the intended purpose, but is preferably those are not decomposed at a high pH. Examples of the silicone surfactant include side chain-modified polydimethylsiloxane, both terminal-modified polydimethylsiloxane, one terminal-modified polydimethylsiloxane, and side chain and both terminal-modified polydimethylsiloxane. A polyether-modified silicone surfactant having, as a modified group, a polyoxyethylene group or a polyoxyethylene polyoxypropylene group is particularly preferable because it exhibits excellent properties as an aqueous surfactant.

The surfactants may be appropriately synthesized, or may be commercially available products. The commercially available products may be easily available from BYK Japan K.K., Shin-Etsu Chemical Co., Ltd., and Dow Corning Toray Co., Ltd.

The polyether-modified silicone surfactant is not particularly limited and may be appropriately selected depending on the intended purpose. Examples thereof include a compound represented by the following general formula in which a polyalkylene oxide structure is introduced to a side chain branched from Si of dimethyl polysiloxane.

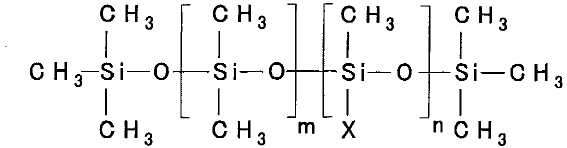

X=-R(C₂H₄O)a(C₃H₆O)bR'

In the general formula, m, n, a, and b each independently denotes an integer, and R and R' each independently denotes an alkyl group, or an alkylene group.

The polyether-modified silicone surfactant may be commercially available products. Examples of the commercially available products include KF-618, KF-642, and KF-643 (all manufactured by Shin-Etsu Chemical Co., Ltd.), and BYK-345, BYK-347, BYK-348, and BYK-349 (all manufactured by BYK-Chemie GmbH).

Examples of the anionic surfactant include polyoxyethylene alkyl ether acetate, dodecylbenzene sulfonate, laurate, and polyoxyethylene alkyl ether sulfate.

Example of commercially available products of the anionic surfactant includes ECTD-3NEX (manufactured by Nikko Chemicals Co., Ltd.).

Examples of the nonionic surfactant include polyoxyethylene alkyl ether, polyoxypropylene polyoxyethylene alkyl ether, polyoxyethylene alkyl ester, polyoxyethylene sorbitan fatty acid ester, polyoxyethylene alkylphenyl ether, polyoxyethylene alkylamine, and polyoxyethylene alkylamide.

An amount of the surfactant contained in the ink is not particularly limited and may be appropriately selected depending on the intended purpose, but preferably 0.01% by mass to 3.0% by mass, more preferably 0.03% by mass to 2.0% by mass. When the amount falls within 0.01% by mass to 3.0% by mass, the surfactant may exhibit its effects sufficiently, the resulting ink may moderately penetrate into a recording medium, and reduction in the image density of the resulting image or strike through can be prevented, which are advantageous.

### <<Water-soluble organic solvent>>

The ink contains a water-soluble organic solvent in order to prevent drying and improve dispersion stability.

Examples of the water-soluble organic solvent include polyhydric alcohols, polyhydric alcohol aryl ethers, nitrogen-containing heterocyclic compounds, amides, amines, sulfur-containing compounds, propylene carbonate, and ethylene carbonate. These may be used alone or in combination.

Examples of the polyhydric alcohols include ethylene glycol, diethylene glycol, triethylene glycol, tetraethylene glycol, polyethylene glycol, propylene glycol, dipropylene glycol, tripropylene glycol, polypropylene glycol, 1,3-butanediol, 3-methyl-1,3-butanediol, 1,5-pentanediol, 1,6-hexanediol, glycerin, trimethylol ethane, trimethylol propane, 1,2,3-butanetriol, 1,2,4-butanetriol, 1,2,6-hexanetriol, and petriol.

Examples of the polyhydric alcohol aryl ethers include ethyleneglycol monoethylether, ethyleneglycol monobutylether, diethyleneglycol monomethylether, diethyleneglycol monoethylether, diethyleneglycol monobutylether, tetraethyleneglycol monomethylether, and propyleneglycol monoethylether.

Examples of the polyhydric alcohol aryl ethers include ethylene glycol monophenyl ether, and ethylene glycol monobenzyl ether.

Examples of the nitrogen-containing heterocyclic compounds include 2-pyrrolidone, N-methyl-2-pyrrolidone, N-hydroxyethyl- 2 -pyrrolidone, 1,3-dimethylimidazolidinone, ε-caprolactam, and γ-butyrolactone.

Examples of the amides include formamide, N-methylformamide, and N,N-dimethylformamide.

Examples of the amines include monoethanol amine, diethanol amine, triethanol amine, monoethylamine, diethylamine, and triethylamine.

Examples of the sulfur-containing compounds include dimethyl sulfoxide, sulfolane, and thiodiethanol.

In addition to the water-soluble organic solvent, other wetting agents may be used. Examples of the wetting agent include those containing a urea compound or saccharides. Examples of the saccharides include monosaccharides, disaccharides, oligosaccharides (including trisaccharides, and tetrasaccharides), and polysaccharides. Specific examples thereof include glucose, mannose, fructose, ribose, xylose, arabinose, galactose, maltose, cellobiose, lactose, sucrose, trehalose, and maltotriose. Here, the above-mentioned polysaccharides mean saccharides in a broad sense, which may include materials existing widely in nature, such as α-cyclodextrin and cellulose.

Moreover, examples of derivatives of the saccharides include reducing sugars of the saccharides (e.g., sugar alcohol represented by the following general formula: HOCH₂(CHOH)ₙCH₂OH, where n denotes an integer of 2 to 5), oxidized sugars of the saccharides (e.g., aldonic acids and uronic acids), amino acids, and thio acids. Among these, the sugar alcohol is preferable. Specific examples of the sugar alcohol include D-sorbitol, sorbitan, maltitol, erythritol, lactitol, and xylitol.

Use of at least one of water-soluble organic solvents selected from the group consisting of diethylene glycol, triethylene glycol, propylene glycol, dipropylene glycol, 1,3-butanediol, 3-methyl-1,3-butanediol, 1,5-pentanediol, 1,6-hexanediol, trimethylol propane, tetramethylol propane, D-sorbitol, and xylitol can achieve an ink being excellent in storage stability and ejection stability.

In the case of a pigment ink, a ratio between the pigment and the water-soluble organic solvent largely affects ejection stability of the ink from a head. When the ink has a high solid content of the pigment and a small amount of the water-soluble organic solvent, moisture evaporates in proximity to an ink meniscus of a nozzle, potentially leading to ejection failures.

An amount of the water-soluble organic solvent contained in the ink is not particularly limited and may be appropriately selected depending on the intended purpose, but preferably 10% by mass to 50% by mass relative to the total amount of the ink.

### <<Other Components>>

The other components are not particularly limited and may be appropriately selected depending on the intended purpose. Examples thereof include a foam inhibitor (a defoaming agent), a pH regulator, an antiseptic-antifungal agent, an anti-rust agent, a chelating agent, and a penetrating agent.

The foam inhibitor (defoaming agent) is added to prevent foaming of the ink or to break generated foam. Examples of the foam inhibitor (defoaming agent) include those represented by the following general formula:

HOR₁R₃C-(CH₂)ₘ-CR₂R₄OH

In the above general formula, R₁ and R₂ each independently denotes a C3-C6 alkyl group; R₃ and R₄ each independently denotes a C1-C2 alkyl group; and m denotes an integer of 1 to 6.

Among the compounds represented by the above general formula, 2,4,7,9-tetramethyldecane-4,7-diol is preferable from the viewpoint of an excellent foam inhibiting effect.

The pH regulator is added to stabilize a dispersion state, and thus ejection by keeping the ink in an alkaline state. However, when the pH of the ink is 11 or more, the ink dissolves a recording head and an ink supplying unit in a large amount. Therefore, depending on a material of the head and unit, problems such as deterioration, leakage, and ejection failure of the ink tend to occur after using for a long period of time. When a pigment is used as the colorant of the ink, an addition of the pH regulator at the time when the pigment and a dispersing agent are kneaded and dispersed in water is more preferable than an addition of the pH regulator along with other additives such as the wetting agent and the penetrating agent after the pigment and the dispersing agent are kneaded and dispersed. This is because the pH regulator may agglomerate the pigment dispersion depending on properties of the pH regulator.

The pH regulator preferably contains one or more of alcohol amines, alkali metal hydroxides, ammonium hydroxides, phosphonium hydroxides, and alkali metal carbonates.

Examples of the alcohol amines include diethanol amine, triethanol amine, and 2-amino-2-ethyl-1,3-propanediol.

Examples of the alkali metal hydroxides include lithium hydroxide, sodium hydroxide, and potassium hydroxide.

Examples of the ammonium hydroxides include ammonium hydroxide, and quaternary ammonium hydroxide.

Examples of the phosphonium hydroxides include quaternary phosphonium hydroxide.

Examples of the alkali metal carbonates include lithium carbonate, sodium carbonate, and potassium carbonate.

Examples of the antiseptic-antifungal agent include sodium dehydroacetate, sodium sorbate, sodium 2-pyridinethiol-1-oxide, sodium benzoate, and sodium pentachlorophenol.

Examples of the anti-rust agent include acidic sulfite, sodium thiosulfate, ammonium thiodiglycolate, diisopropyl ammonium nitrate, pentaerythritol tetranitrate, and dicyclohexyl ammonium nitrate.

Examples of the chelating agent include sodium ethylenediamine tetraacetate, sodium nitrilotriacetate, sodium hydroxyethylethylenediamine triacetate, sodium diethylenetriamine pentaacetate, and sodium uramil diacetate.

Examples of the penetrating agent include a C7 to C11 diol compound. Examples of the C7 to C11 diol compound include 2-ethyl-1,3-hexanediol, and 2,2,4-trimethyl-1,3-pentanediol.

An amount of the penetrating agent contained in the ink is preferably 1% by mass to 5% by mass relative to the total amount of the ink from the viewpoint of storage stability.

A viscosity of the ink is not particularly limited and may be appropriately selected depending on the intended purpose, but is preferably 3 mPa-s to 20 mPa·s, more preferably 6 mPa·s to 12 mPa·s at 25°C, which results in more excellent ejection stability and image quality.

### <Ink set>

An ink used for an inkjet recording method of the present invention is preferably an ink set meeting the following requirements (1) to (3), in addition to the monochrome inks:
(1) The ink set is composed of a black ink and other one or more inks.
(2) Each ink has the static surface tension of 18.0 mN/m to 27.0 mN/m at 25°C, and the receding contact angle on the nozzle plate is 50° or more.
(3) A difference in the static surface tension between the black ink and the other color ink or each of the other color inks [(black ink) - (the other color ink or each of the other color inks)] is 0 mN/m to 4 mN/m at 25°C.

An ink having a low static surface tension of 18.0 mN/m to 27.0 mN/m at 25°C wets and spreads on a recording medium well and rapidly penetrates into the recording medium after the ink is impacted on the recording medium. Accordingly, the ink tends to achieve excellent color development and high image quality. However, the ink easily wets and spreads also on a surface of the nozzle in the liquid ejection head, making it difficult to ensure continuous ejection stability.

The ink having the receding contact angle on the nozzle plate of 50° or more is easily released from the surface of the nozzle plate. That is, even when the ink overflows onto the surface of the nozzle, the overflowed ink droplets are released from the surface following the subsequently ejected droplets, which is advantageous for the ejection stability.

However, in the case of the ink having the low static surface tension as described above, the ink easily wets and spreads on, and, at the same time, easily released from the surface of the nozzle, so that only a part of the overflowed droplets follows the subsequently ejected droplets and the residual part of the overflowed droplets which are spread to far away from the nozzle opening disadvantageously remains on the surface of the nozzle plate. As a result, the residual ink gradually accumulates, which finally adversely affects the ejection of the ink droplets.

Even when the ink droplets are spread to far away from the nozzle opening as described above, the two-step pull pulse which pulls the ink into the nozzle in the two-step manner within the one printing unit cycle can pulls the ink located in proximity to the nozzle outlet into the nozzle two times to thereby form the meniscus at the predetermined position. Therefore, almost all of the overflowed ink droplets are pulled. As a result, the ejection is less adversely affected by the overflowed ink droplets (e.g., deflection of the droplets ejection) and an excellent image can be obtained.

The ink used for an inkjet recording method of the present invention is preferably an ink set composed of a black ink and one or more other inks.

The static surface tension is related to a penetration process of the inks in the ink set into a recording medium. Therefore, in the case where a plurality colors of inks is used to form a color image, the inks differentially penetrate into the recording medium at an area at which difference colors are in contact with each other due to the difference in the static surface tension, leading to deterioration of image quality.

In particular, a black ink is excellent in visibility, so that even a thin line or a contour of dot can be clearly visible, but image disturbance tends to be prominent. For example, in the case where a dot of the black ink having high penetrability (i.e., low static surface tension) is in contact with a dot of other color ink having low penetrability (i.e., high static surface tension), the black ink is pulled toward the other color inks having high static surface tension. As a result, the black ink is mixed into the other color ink to cause a blurred contour therebetween. This is a so-called bleed phenomenon. The bleed phenomenon easily occurs especially on a recording medium having low penetrability, and in high-speed printing in which a sufficiently long penetration time is not ensured.

The bleed phenomenon can be prevented by raising the static surface tension of the black ink, and lowering the static surface tension of the other color ink. However, when the difference in the static surface tension between the black ink and the other color ink is too large, the another ink is pulled toward and mixed into the black ink, so that black characters may be thinned or the bleed may be occurred at a boundary portion, leading to deterioration of image quality.

In contrast, when the difference in the static surface tension is small, no or only slight bleed occurs. Additionally, even when the bleed occurs, the other color ink is pulled toward the black ink having lower brightness than the other color ink, which has only a small affect on image quality. The present inventors have focused on the above, and solve the bleed problem by setting the static surface tension of the black ink at 25°C to be 0 mN/m to 4 mN/m higher than that of the other color ink.

According to the inkjet recording method of the present invention using the ink set, even when the water-repellent film is gradually deteriorated due to a physical load applied during a maintenance work for keeping a surface of the nozzle plate on which the nozzle constituting the droplet ejection head is formed clean, the ink set including a black and other one or more colors and having a low static surface tension (18.0 mN/m to 27.0 mN/m at 25°C) and a large receding contact angle (50° or more on the nozzle plate) can be ejected stably (ejection stability: no streak, white void, or jetting disturbance in a solid area), and good image (uniformity in a solid area, and no bleed between the black ink and other color inks) can be obtained.

Each of inks included in the ink set preferably contains water, a water-soluble organic solvent, a colorant, and a surfactant; and, if necessary, further contains other components.

The water, the water-soluble organic solvent, the colorant, the surfactant, and the other components contained in each of inks in the ink set may be the same as in the ink.

### <Colorization>

Each of inks in the ink set composed of a black ink and other one or more inks used in the present invention is not particularly limited and may be appropriately selected depending on the intended purpose. Examples thereof include a yellow ink, a magenta ink, and a cyan ink. An ink set containing two or more of these inks can be used for recording to thereby form a multicolor image. An ink set containing all of these inks can be used for recording to thereby form a full color image.

### <Ink cartridge>

An ink cartridge used in the present invention is an ink cartridge in which a container houses an ink or each ink in an ink set used in an inkjet recording method of the present invention. That is, the ink cartridge includes a container and an ink housed in the container; and, if necessary, further includes appropriately selected other members.

The container is not particularly limited, and a shape, structure, size, and material thereof may be appropriately selected depending on the intended purpose. For example, example of the container includes those having an ink bag formed of a plastic container or an aluminum laminate film.

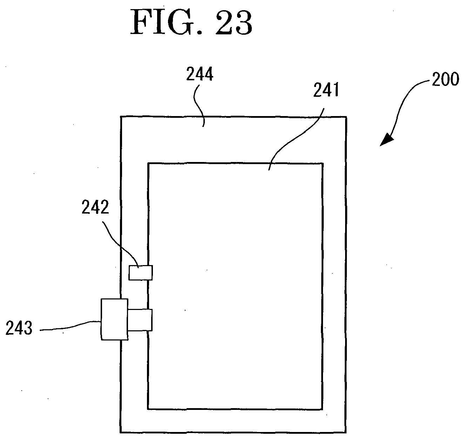

Specific examples of the ink cartridge include those having a configuration shown in FIG. 22 or 23. FIG. 22 shows an example of an ink cartridge. FIG. 23 shows an ink cartridge shown in FIG. 22 including a case (housing).

An ink bag 241 is filled with an ink by injecting the ink from an ink inlet 242, and evacuated. Then, the ink inlet 242 is sealed by fusing. At the time of use, a needle equipped in a device main body is inserted into an ink outlet 243 formed of a rubber member to thereby supply the ink to the device main body. The ink bag 241 is formed of a wrapping member such as an air non-permeable aluminum laminate film. As illustrated in FIG. 23, the ink bag 241 is typically housed in a plastic cartridge case 244, which is then detachably mounted in various inkjet recording devices as an ink cartridge 240.

The ink cartridge houses therein the ink or each ink of the ink set, and can be detachably mounted in various inkjet recording devices, particularly preferably detachably mounted to the inkjet recording device described below.

Next, an inkjet recording method and an inkjet recording device of the present invention are described below with reference to the accompanying drawings.

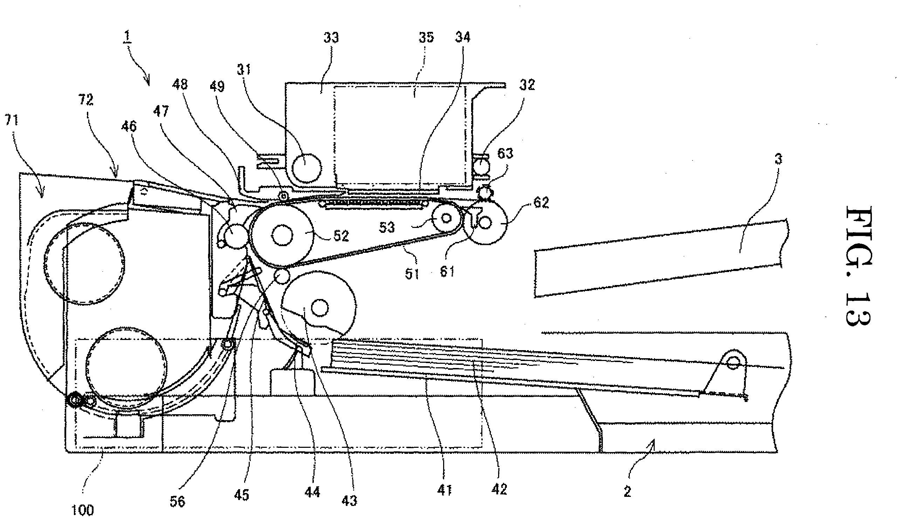

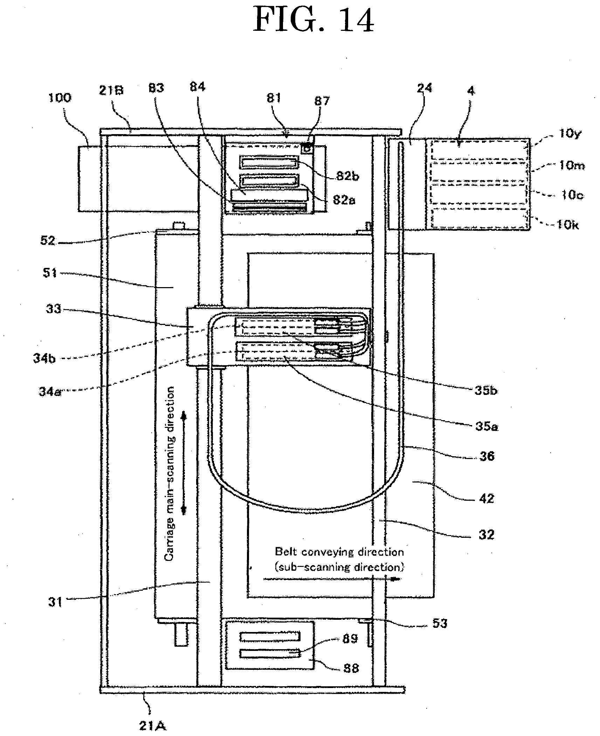

A one example of the inkjet recording device of the present invention is described with reference to FIGs. 13 and 14. FIG. 13 is a side view of the inkjet recording device illustrating its entire configuration, and FIG. 14 is a plan view of the inkjet recording device illustrating its major components.

The inkjet recording device is a serial-type inkjet recording device. In the inkjet recording device, a carriage 33 is supported on a main guide rod 31 and a sub guide rod 32 serving as guide members laterally connected to the side plates 21A and 21B located one at each side of a main body 1 so as to be slidable in a main-scanning direction, and moved to scan in a direction indicated by an arrow in FIG. 14 (carriage main scanning direction) via a timing belt by a main scanning motor (not shown).

On the carriage 33 are mounted recording heads 34a and 34b (collectively referred to as "recording heads 34" unless distinguished) serving as liquid ejection heads for ejecting ink droplets of different colors, e.g., yellow (Y), cyan (C), magenta (M), and black (K) so that nozzle arrays of multiple nozzles are arranged in a sub-scanning direction perpendicular to the main scanning direction and ink droplets are ejected downward from the nozzles.

For example, each of the recording heads 34 has two nozzle arrays. In such a case, for example, one of the nozzle arrays of the recording head 34a ejects droplets of black (K) ink and the other ejects droplets of cyan (C) ink. In addition, one of the nozzle arrays of the recording head 34b ejects droplets of magenta (M) ink and the other ejects droplets of yellow (Y) ink. Note that, the recording head 34 may include a surface of a nozzle having plural nozzle arrays of respective colors.

On the carriage 33 are mounted sub tanks 35a and 35b (collectively referred to as "sub tanks 35" unless distinguished) as a second ink supplying section to supply respective colors of ink to the corresponding nozzle arrays of the recording head 34. The sub tank 35 is supplied with respective colors of recording liquid via supply tubes 36 for corresponding colors by a supply pump unit 24 from ink cartridges (main tanks) of respective colors 10y, 10m, 10c, and 10k that are detachably attached to a cartridge application section 4.

The inkjet recording device further includes a separation pad 44 as a paper feeding section for feeding sheets of paper 42 accumulated on a sheet accumulating section (pressurizing plate) 41 of a paper feeding tray 2. The separation pad 44 is directed to face a semicircular roller (paper feeding roller) 43 and a paper feeding roller 43 configured to separate and feed one sheet 42 at a time from the sheet accumulating section 41, made of a material having a high friction coefficient, and biased toward the paper feeding roller 43 side.

The inkjet recording device further includes a guide member 45 configured to guide the sheets of paper 42, a counter roller 46, a conveyance guide 47, and a pressing member 48 including a front end-pressing roller 49 in order to transfer the sheets of paper 42 fed from the paper-feeding section to a lower side of the recording head 34. The inkjet recording device also includes a conveyance belt 51 serving as a conveying means configured to electrostatically attract the sheet of paper 42 to convey the sheet of paper to a position facing the recording head 34.

The conveyance belt 51 is an endless belt looped over a conveyance roller 52 and a tension roller 53 so as to rotationally travel in a belt conveying direction (sub-scanning direction). The inkjet recording device further includes a charging roller 56 serving as a charging unit configured to charge a surface of the conveyance belt 51. The charging roller 56 is arranged so as to be brought into contact with a surface layer of the conveyance belt 51 and be rotationally driven by the rotation of the conveyance belt 51. The conveyance belt 51 is caused to rotationally travel in the belt conveying direction illustrated in FIG. 14 by the transfer roller 52 that is rotationally driven by a sub-scanning motor (not shown) via the timing belt.

The inkjet recording device further includes, as a paper discharging section configured to discharge the sheet of paper 42 on which an image has been formed by the recording heads 34, a separation claw 61 for separating the sheet of paper 42 from the conveyance belt 51, a paper discharge roller 62, a spur (paper discharge roller) 63, and a paper discharge tray 3 located below the paper discharge roller 62.

The inkjet recording device also includes a duplex printing unit 71 detachably mounted at the back of the main body 1. The duplex printing unit 71 captures the sheet of paper 42 rotationally conveyed in a reverse direction of the conveyance belt 51, reverses the sheet of paper, and then re-feeds the reversed sheet of paper between the counter roller 46 and the conveyance belt 51. At the top face of the duplex printing unit 71 is formed a manual feeding tray 72.

The inkjet recording device further includes a retaining-recovery mechanism 81 for retaining and recovering the nozzle states of the recording head 34 in a non-printing region at one side of the carriage 33 in the scanning direction. The retaining-recovery mechanism 81 includes cap members (hereinafter referred to as "caps") 82a and 82b (collectively referred to as "caps 82" unless distinguished) for capping the surface of the nozzle plate of the recording head 34, a wiper member (wiper blade) 83 for wiping the surface of the nozzle plate, a spitting receiver 84 for receiving droplets which do not contribute to image recording spitted to remove a thickened recording liquid, and a carriage lock 87 for locking the carriage 33. The inkjet recording device also includes a waste tank 100 replaceably mounted at a lower side of the retaining-recovery mechanism 81 of the recording head to store waste liquid discharged by retaining-recovery operations.

The recording apparatus further includes a non-recording liquid ejection receiver 88 in a non-printing region at the other side of the carriage 33 in the carriage main-scanning direction so as to receive the non-recording liquid when the recording liquid is thickened and thus discharged. The non-recording liquid ejection receiver 88 includes an opening 89 along the nozzle array direction of the recording head 34.

In the inkjet recording device having the above configuration, the sheet of paper 42 is separated from those others in the paper feeding tray 2, and then fed in a substantially vertically upward direction. Then, the sheet of paper is guided by the guide member 45, and conveyed with being sandwiched between the conveyance belt 51 and the counter roller 46. The front end of the sheet of paper is guided by the conveyance guide 47, and pressed against the conveyance belt 51 by the front end-pressing roller 49, by which the conveyance direction thereof is changed by approximately 90°.

At this time, voltages are applied to the charging roller 56 so that plus outputs and minus outputs are alternately repeated. As a result, the conveyance belt 51 is charged in an alternating voltage pattern. When the sheet of paper 42 is fed onto the charged conveyance belt 51, the sheet of paper 42 is attracted onto the conveyance belt 51 and then conveyed in the sub-scanning direction by the rotational movement of the conveyance belt 51.

By driving the recording heads 34 in accordance with image signals while moving the carriage 33, ink droplets are ejected onto the stationary sheet of paper 42 to thereby record one line of a desired image. The sheet of paper 42 is then conveyed by a predetermined distance, and the next line of image is recorded on the sheet of paper. When a recording end signal a signal indicating that the rear end of the sheet of paper 42 has reached the recording region is received, the recording operation is terminated and the sheet 42 is discharged to the paper discharge tray 3.

To perform a retaining-recovery operation of the nozzles of the recording head 34, the carriage 33 is moved to a home position facing the retaining-recovery mechanism 81, where the retaining-recovery operations are carried out including nozzle suctioning in which the nozzles are capped with the caps 82 and then the ink is suctioned from the nozzle, and spitting in which droplets which do not contribute to the image formation are ejected. As a result, the ink droplets are stably ejected to form an image.

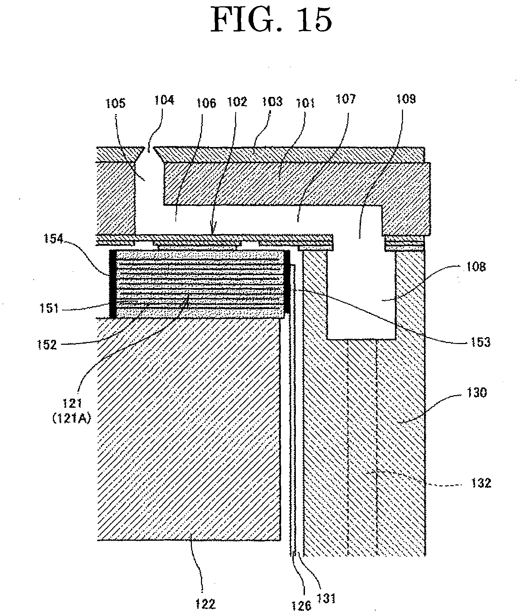

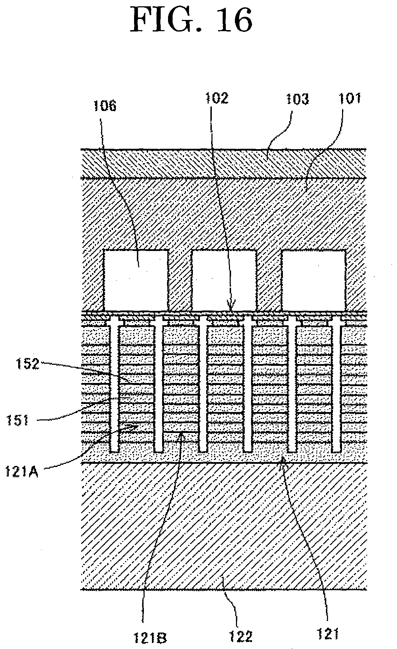

Next, an example of a liquid ejecting head constituting the recording head 34 is described with reference to FIGs. 15 and 16. Note that FIG. 15 is a cross sectional view along a longitudinal direction of a liquid chamber of the head, and FIG. 16 is a cross sectional view along a transverse direction (nozzle arrangement direction) of the liquid chamber of the head.

The liquid ejection head includes a flow channel plate 101, an oscillation plate 102 joined to a lower surface of the flow channel plate 101, and a nozzle plate 103 joined to an upper surface of the flow channel plate 101 The flow channel plate, the oscillation plate, and the nozzle plate are arranged in a layer to thereby form a nozzle communication path 105 which is a flow channel in communication with the nozzles 104 configured to eject liquid droplets (ink droplets), the pressurizing liquid chamber 106 serving as a pressure generating chamber, and an ink supply port 109 which is in communication with a common liquid chamber 108 configured to supply ink to the pressurizing liquid chamber 106 via a fluid resistor section (fluid supply path) 107.

The liquid ejection head further includes two (only one shown in FIG. 15) stacked piezoelectric members 121 serving as an electromechanical transducer which is the pressure generating unit (actuator unit) configured to deform the oscillation plate 102 to thereby pressurize the ink in the pressurizing liquid chamber 106, and a base substrate 122 to which the piezoelectric members 121 are joined and fixed. The piezoelectric members 121 form a plurality of piezoelectric element columns 121A and 121B, which are formed by forming grooves through a slit processing in which the piezoelectric members are not divided. In this example, the piezoelectric element column 121A is used as a driving piezoelectric element column that applies drive waveforms, and the piezoelectric element column 121B is used as a non-driving piezoelectric element column that does not apply the drive waveforms. A FPC cable 126 having a drive circuit (drive IC) (not shown) is connected to the piezoelectric element columns 121A of the piezoelectric members 121.

A periphery of the oscillation plate 102 is joined to a frame member 130. The frame member 130 includes a through hole portion 131 configured to accommodate the actuator unit composed of the piezoelectric members 121 and the base substrate 122, a recess portion serving as the common liquid chamber 108, and an ink supply hole 132 serving as a liquid supply port configured to supply ink from outside to the common liquid chamber 108.

The flow channel plate 101 has the nozzle communication path 105, and a recess portion and a hole serving as the pressurizing liquid chamber 106, which are formed by anisotropically etching a single crystal silicon substrate having a crystal plane orientation (110) with an alkaline etchant such as a potassium hydroxide (KOH) aqueous solution. However, the flow channel plate is not limited to those formed of the single crystal silicon substrate. Other materials such as a stainless steel ) substrate or photosensitive resin may be used.

The oscillation plate 102 is made of a metallic nickel plate and is fabricated, for example, by electroforming (electromolding). However, other metallic plates or a connected member of metal and resin plates may be used. The piezoelectric element columns 121A and 121B of the ) piezoelectric members 121 are adhesively bonded to the oscillation plate 102, which are further adhesively bonded to the frame member 130.

The nozzle plate 103 includes the nozzles 104 having a diameter of 10 µm to 30 µm corresponding to the respective pressurizing liquid chambers 106, and is adhesively bonded to the flow channel plate 101. The nozzle plate 103 is obtained by forming a water-repellent layer on an outermost surface of a nozzle forming member made of a metal member via required layers.

The piezoelectric member 121 is the stacked piezoelectric element (herein referred to as PZT) obtained by alternately stacking piezoelectric materials 151 and internal electrodes 152. An individual electrode 153 and a common electrode 154 are connected to each of the internal electrodes 152 alternately pulled out to different end faces of the piezoelectric member 121. Notably, in this embodiment, the liquid ejection head is configured such that the ink in the pressurizing liquid chamber 106 is pressurized using a displacement in a d33 direction as a piezoelectric direction of the piezoelectric member 121. However, the liquid ejection head may be configured such that the ink in the pressurizing liquid chamber 106 is pressurized using a displacement in a d31 direction as a piezoelectric direction of the piezoelectric member 121.

In the liquid ejection head having the above configuration, the voltage applied to the piezoelectric member 121 is lowered from a reference potential Ve to cause the driving piezoelectric member column 121A to contract, which lowers the oscillation plate 102 and expands the volume of the pressurizing liquid chamber 106. As a result, ink flows into the pressurizing liquid chamber 106. Thereafter, the voltage applied to the piezoelectric element column 121A is raised to cause the piezoelectric element column 121A to extend in a stacked direction, which deforms the oscillation plate 102 toward the nozzle 104 direction and contract the volume of the pressurizing liquid chamber 106. As a result, the ink in the pressurizing liquid chamber 106 is pressurized to thereby eject (jet) ink droplets from the nozzles 104.

When the voltage applied to the driving piezoelectric member column 121A returns to the reference potential Ve, the oscillation plate 102 returns to an initial position, which expands the pressurizing liquid chamber 106 to thereby generate a negative pressure. As a result, the ink is supplied into the pressurizing liquid chamber 106 from the common liquid chamber 108. After the oscillations of meniscus faces in the nozzles 104 are damped and stabilized, the liquid ejection head is shifted for a next droplet ejection operation.

A method for driving the head is not limited to the above-mentioned method (pull and push-out method). Depending on a waveform to be input, a pull-out method or a push-out method may be utilized.

In an inkjet recording, it has been known that ejection property of ink droplets is greatly affected by the shape and formation precision of a nozzle, and surface properties of a nozzle plate. The ink is deposited in proximity to the nozzle on the surface of the nozzle plate causes failures such as a deflected ejection direction of the ink droplets and instability of jetting speed. In order to prevent the failures resulted from the deposited ink, it has been attempted to stably eject the ink droplets by making the surface of the nozzle plate (surface onto which the ink is ejected) to be water-repellent through formation of a water-repellent film.

However, the water-repellent film is gradually peeled off by wiping off the ink deposited on the water-repellent film through the maintenance work (e.g., suction), leading to deterioration of the water-repellency of the nozzle plate. In order to address the above failure, although it has been attempted to improve adherence between the water-repellent film and the nozzle plate, it is not easy to prevent the water-repellent film from deteriorating.

The recording head used in the present invention includes a nozzle plate on which a nozzle is formed, and a water-repellent film which is provided on a surface of the nozzle plate onto which an ink is ejected. As a primer layer of the water-repellent film, a primer layer formed of an inorganic oxide may be provided between the nozzle plate and the water-repellent film.

The water-repellent film preferably contains a polymer containing a perfluoroalkyl chain. A method for forming the water-repellent film is preferably any of the following methods:
(1) Sol-gel method: A solution of a water-repellent treatment agent in which (A) a polymer and/or an oligomer containing at least one perfluoroalkyl group and at least one alkoxysilyl group and (B) a silane compound represented by the following General Formula (II) are dissolved into a solvent is applied onto a substrate, followed by allowing to react to form a water-repellent film and to adhere onto the substrate.

   Si(Y)(OR)₃ ··· General Formula (II)

   In the General Formula (II), R denotes a hydrogen atom or an alkyl group; Y denotes a substituted or unsubstituted alkyl group, a substituted or unsubstituted aryl group, or OR group in the General Formula (II) which has the same meaning as described above; and each R may be the same as or different from each other.
(2) Vaporization method: On a SiO₂ film formed on a surface onto which droplets for recording are ejected, vaporizations using, as a vaporization source, (A) a polymer and/or an oligomer containing at least one perfluoroalkyl group and at least one alkoxysilyl group and vaporizations using, as a vaporization source, (B) a silane compound represented by the General Formula (II) are separately repeated in difference zones of a vacuum chamber. The resultant vaporized (A) and (B) are allowed to react to form a water-repellent film and to adhere onto the SiO₂ film.

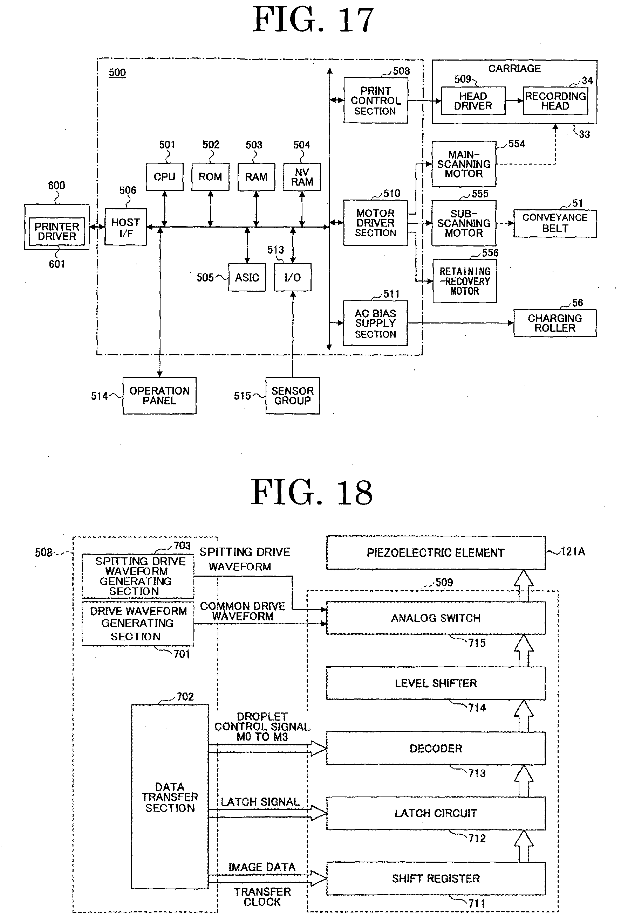

Next, an outline of a control section of an inkjet recording device is described with reference to FIG. 17. Notably, this figure is a block diagram illustrating the control section.

The control section 500 includes a CPU 501 configured to control the entire inkjet recording device and a spitting operation according to the present invention; a ROM 502 configured to store computer programs to be executed by the CPU 501 and other fixed data; a RAM 503 configured to temporarily store data such as image data; a rewritable non-volatile memory 504 configured to store data regardless of the power supply of the inkjet recording device being turned on or off; and an ASIC 505 configured to process various signals for processing image data, and input and output signals for image processing such as sorting and for controlling the entire inkjet recording device.

The control section 500 further includes a print control section 508 including a data transfer unit and a signal generating unit configured to drive-control the recording head 34; a head driver (driver IC) 509 configured to drive the recording head 34 provided at the carriage 33 side; a motor control section 510 configured to drive a main-scanning motor 554 for moving the carriage 33 to scan, a sub-scanning motor 555 for rotationally moving the conveyance belt 51, a retaining-recovery motor 556 for moving the caps 82 of the retaining-recovery mechanism 81 and the wiper member 83; and an AC bias supply section 511 configured to supply an AC bias to the charging roller 56.

The controller 500 is connected to an operation panel 514 for inputting and displaying desired information in the inkjet recording device.

The control section 500 further includes an I/F 506 configured to communicate with a host side for receiving and sending data and signals, such that the I/F 506 receives the data and signals via a cable or the network from the host side 600 including an information processing apparatus such as a personal computer, an image reading apparatus such as an image scanner, and an imaging apparatus such as a digital camera.

The CPU 501 of the control section 500 retrieves printing data from a receive buffer in the I/F 506 to analyze the retrieved printing data, causes the ASIC 505 to perform desired processing such as image processing or sorting data, and transfers the processed data from the print control section 508 to the head driver 509. Note that dot pattern data for outputting images are generated by a printer driver 601 located at the host side 600.

The print control section 508 serially transfers the above image data while outputting transfer clocks, latch signals, and control signals required for transferring the above image data to the head driver 509. Additionally, the print control section further includes a driving signal generating section composed of a D/A converter configured to D/A convert pattern data of drive pulses stored in the ROM 502, a voltage amplifier, and a current amplifier, which are used for outputting a certain signal used in the present invention to the head driver 509.

The head driver 509 generates pull pulses and ejecting pulses by selecting the drive pulses forming a drive waveform supplied from the print control section 508 based on the image data corresponding to one line of the image data serially input to the recording head 34. The head driver then applies the generated pulses to the piezoelectric members 121 serving as a pressure generating unit configured to generate energy for ejecting liquid droplets from the recording head 7, to thereby drive the recording head 34. In this process, different sizes of dots such as large, medium, and small sized droplets may be formed by selecting a part of or an entire part of the drive pulses constituting the driving signal and a part of or an entire part of the waveform components constituting the drive pluses.

An I/O section 513 acquires information from a sensor group 515 having various sensors attached to the inkjet recording device, selects desired information for controlling the printer, and use the acquired information for controlling the print control section 508, the motor control section 510, and the AC bias supply section 511. The sensor group 515 includes optical sensors configured to detect a position of a sheet of paper; a thermistor configured to monitor the temperature within the device; sensors configured to monitor the voltage of the charging belt; and an interlock switch configured to detect open or close state of a cover. The I/O section 513 can process various kinds of sensor information.

Next, examples of the print control section 508 and the head driver 509 are described with reference to FIG. 18.

The print control section 508 includes a drive waveform generating section 701 configured to generate and output a signal including pull pulses within one printing cycle upon image formation; a data transfer section 702 configured to output 2-bit image data (grayscale signal 0, 1) corresponding to a printed image, clock signals, latch signals (LAT), droplet control signals M0 to M3; and a spitting drive waveform generating section 703 configured to generate and output a drive waveform for spitting.

Note that the droplet control signal is a 2-bit signal for instructing switching of the analog switch 715 serving as a switching unit of the head driver 509 for each droplet. The droplet control signal switches to a high (H) level (ON) for selecting the drive pulses or the waveform components, and switches to a low (L) level (OFF) for not selecting the drive pulses or the waveform components, based on the printing cycle of the common drive waveform.

The head driver 509 includes a shift register 711 configured to input transfer clocks (shift clocks) transferred from a data transfer section 702 and serial image data (grayscale data: 2 bits/1 channel (1 nozzle)); a latch circuit 712 configured to latch various registration values from the shift register 711 with latch signals; a decoder 713 configured to decode the grayscale data and the control signals M0 to M3 and output the decoded results; a level shifter 714 configured to perform level conversion on a logic-level voltage signal of the decoder 713 to an analog-level voltage signal which is operable by an analog switch 715; and the analog switch 715 configured to be switched on or off (open or close) by the signal outputted from the decoder 713 via the level shifter 714.

### Examples

Examples of the present invention now will be described, but the present invention is not limited thereto. In Examples, "part(s)" means "part(s) by mass," unless otherwise stated, and "%" means "% by mass," unless otherwise stated.

### (Production Example 1)

### <Preparation of pigment dispersion>

### -Dispersion Production Example 1: preparation of cyan dispersion-

A 1 L-flask equipped with a mechanical stirrer, a thermometer, a nitrogen-inlet tube, a reflux tube and a dropping funnel, which had been sufficiently purged with nitrogen gas, was charged with styrene (11.2 g), acrylic acid (2.8 g), lauryl methacrylate (12.0 g), polyethylene glycol methacrylate (4.0 g), styrene macromer (4.0 g) (manufactured by TOAGOSEI CO., LTD., product name: AS-6), and mercaptoethanol (0.4 g), followed by heating to 65°C. Next, a mixed solution of styrene (100.8 g), acrylic acid (25.2 g), lauryl methacrylate (108.0 g), polyethylene glycol methacrylate (36.0 g), hydroxylethyl methacrylate (60.0 g), styrene macromer (36.0 g) (manufactured by TOAGOSEI CO., LTD., product name: AS-6), mercaptoethanol (3.6 g), azobis methylvaleronitrile (2.4 g), and methyl ethyl ketone (18 g) was added dropwise into the flask for 2.5 hours.

Thereafter, a mixed solution of azobis methylvaleronitrile (0.8 g) and methyl ethyl ketone (18 g) was added dropwise into the flask for 0.5 hours. After aging the mixture at 65°C for 1 hour, azobis methylvaleronitrile (0.8 g) was added thereto, and the resulting mixture was further aged for 1 hour. Upon completion of the reaction, methyl ethyl ketone (364 g) was added to the flask, to thereby obtain a polymer solution (800 g) having a concentration of 50% by mass.

Next, the resultant polymer solution is partially dried and measured for the weight average molecular weight by a gel permeation chromatography (standard: polystyrene, solvent: tetrahydrofuran). As a result, the polymer solution was found to have the weight average molecular weight of 15,000.

The polymer solution (28 g), a copper phthalocyanine pigment (26 g), a 1 mol/L aqueous solution of potassium hydroxide (13.6 g), methylethyl ketone (20 g), and ion-exchanged water (30 g) were sufficiently stirred.

Then, the resultant was kneaded 20 times with a three roll mill (manufactured by Noritake Co., Limited, product name: NR-84A). The resultant paste was loaded into ion-exchanged water (200 g), followed by sufficiently stirring and distilling off methyl ethyl ketone and water by an evaporator, to thereby obtain a blue polymer particle dispersion (160 g) having a solid content of 20.0% by mass.

The polymer particles were found to have the average particle diameter (D50%) of 98 nm as measured by MICROTRAC UPA (manufactured by NIKKISO CO., LTD.).

### -Dispersion Production Example 2: magenta dispersion-

A magenta polymer particle dispersion was obtained in the same manner as in Dispersion Production Example 1, except that the copper phthalocyanine pigment was changed to Pigment Red 122. The polymer particles were found to have the average particle diameter (D50%) of 124 nm as measured by MICROTRAC UPA (manufactured by NIKKISO CO., LTD.).

### -Dispersion Production Example 3: yellow dispersion-

A yellow polymer particle dispersion was obtained in the same manner as in Dispersion Production Example 1, except that the copper phthalocyanine pigment was changed to Pigment Yellow 74. The polymer particles were found to have the average particle diameter (D50%) of 78 nm as measured by MICROTRAC UPA (manufactured by NIKKISO CO., LTD.).

### -Dispersion Production Example 4: black dispersion-

A black polymer particle dispersion was obtained in the same manner as in Dispersion Production Example 1, except that the copper phthalocyanine pigment was changed to Carbon black (manufactured by Evonik Degussa GmbH, FW100). The polymer particles were found to have the average particle diameter (D50%) of 110 nm as measured by MICROTRAC UPA (manufactured by NIKKISO CO., LTD.).

### (Production Example 2)

### <Ink Preparation Example>

Ink Preparation Examples 1 to 18 were produced according to formulations described in Tables 1 to 3 using pigment dispersions of Dispersion Production Examples 1 to 4.

Specifically, a water-soluble organic solvent, a surfactant, a foam inhibitor (defoaming agent), a penetrating agent, and ion-exchanged water were mixed in this order, following by stirring for 30 min. Then, the pigment dispersion produced in any of Dispersion Production Examples 1 to 4 was added thereto, followed by stirring for 30 min and filtering through a membrane filter (pore diameter: 0.8 µm) to thereby obtain the ink.

**Table 1**

| | | Ink Preparation Example | | | | | |
|---|---|---|---|---|---|---|---|
| | | 1 | 2 | 3 | 4 | 5 | 6 |
| Dispersion Production Example 1 | C | 18.0 | | | | 10.0 | |
| Dispersion Production Example 2 | M | | 27.0 | | | | 12.0 |
| Dispersion Production Example 3 | Y | | | 18.0 | | | |
| Dispersion Production Example 4 | K | | | | 26.0 | | |
| Surfactant | Surfactant A | 0.02 | 0.02 | 0.02 | 0.02 | 0.04 | 0.04 |
| | Surfactant B | | | | | | |
| | Surfactant C | | | | | | |
| | Surfactant D | | | | | | |
| Water-Soluble Organic Solvent | Glycerin | 8.0 | 8.0 | 8.0 | 10.0 | 6.0 | 6.0 |
| | 3-methyl-1,3-butanediol | | 23.0 | | | | |
| | 1,3-butanediol | | | | | | |
| | 1,6-hexanediol | 25.0 | | 25.0 | | 32.0 | 32.0 |
| | 1,5-pentanediol | | | | 20.0 | 2.0 | 2.0 |
| | 2-pyrrolidone | | | | | | |
| Foam Inhibitor | 2,4,7,9-tetramethyldecane-4,7-diol | 0.20 | 0.20 | 0.20 | 0.20 | 0.15 | 0.15 |
| Defoaming Agent | KM-72F | | | | | | |
| Penetrating Agent | 2-ethyl-1,3-hexanediol | 3.0 | 3.0 | 3.0 | 3.0 | 2.0 | 2.0 |
| Antifungal Agent | PROXELLV | 0.25 | 0.25 | 0.25 | 0.25 | 0.25 | 0.25 |
| Pure Water | | Balance | Balance | Balance | Balance | Balance | Balance |
| Total (% by mass) | | 100.0 | 100.0 | 100.0 | 100.0 | 100.0 | 100.0 |

**Table 2**

| | | Ink Preparation Example | | | | | |
|---|---|---|---|---|---|---|---|
| | | 7 | 8 | 9 | 10 | 11 | 12 |
| Dispersion Production Example 1 | C | | | 15.0 | | | |
| Dispersion Production Example 2 | M | | | | 20.0 | | |
| Dispersion Production Example 3 | Y | 16.0 | | | | 10.0 | |
| Dispersion Production Example 4 | K | | 20.0 | | | | 11.0 |
| Surfactant | Surfactant A | | | | | | |
| | Surfactant B | 2.5 | 2.5 | | | | |
| | Surfactant C | | | 0.50 | 0.50 | | |
| | Surfactant D | | | | | 2.5 | 2.5 |
| Water Soluble Organic Solvent | Glycerin | 6.0 | 7.0 | 8.0 | 8.0 | 10.0 | 10.0 |
| | 3-methyl-1,3-butanediol | | | 25.0 | 25.0 | | |
| | 1,3-butanediol | | | | | 15.0 | |
| | 1,6-hexanediol | 32.0 | 28.0 | | | | |
| | 1,5-pentanediol | 2.0 | 2.0 | | | | 20.0 |
| | 2-pyrrolione | | | 2.0 | 2.0 | | |
| Foam Inhibitor | 2,4,7,9-tetramethyldecane-4,7-diol | 0.30 | 0.20 | 0.20 | 0.20 | | |
| Defoaming Agent | KM-72F | | | | | 0.50 | 0.50 |
| Penetrating Agent | 2-ethyl-1,3-hexanediol | 3.5 | 3.5 | 3.0 | 3.0 | 3.0 | 3.0 |
| Antifungal Agent | PROXEL LV | 0.20 | 0.20 | 0.20 | 0.20 | 0.25 | 0.25 |
| Pure Water | | Balance | Balance | Balance | Balance | Balance | Balance |
| Total (% by mass) | | 100.0 | 100.0 | 100.0 | 100.0 | 100.0 | 100.0 |

**Table 3**

| | | Ink Preparation Example | | | | | |
|---|---|---|---|---|---|---|---|
| | | 13 | 14 | 15 | 16 | 17 | 18 |
| Dispersion Production Example 1 | C | 23.0 | | 10.0 | | 17.0 | |
| Dispersion Production Example 2 | M | | 18.0 | | 12.0 | | 25.0 |
| Dispersion Production Example 3 | Y | | | | | | |
| Dispersion Production Example 4 | K | | | | | | |
| Surfactant | Surfactant A | 0.08 | 0.08 | 0.10 | 0.10 | | |
| | Surfactant B | | | 1.0 | 1.0 | | |
| | Surfactant C | | | | | | |
| | Surfactant D | | | | | 1.30 | 1.30 |
| Water Soluble Organic Solvent | Glycerin | 12.0 | 12.0 | 6.0 | 6.0 | 8.5 | 8.5 |
| | 3-methyl-1,3-butanediol | | 18.0 | | | | |
| | 1,3-butanediol | | | | | 27.0 | |
| | 1,6-hexanediol | 20.0 | | 32.0 | 32.0 | | 23.0 |
| | 1,5-pentanediol | | | 2.0 | 2.0 | | |
| | 2-pyrrolidone | | 1.0 | | | | |
| Foam Inhibitor | 2,4,7,9-tetramethyldecane-4,7-diol | 0.50 | 0.50 | 0.30 | 0.30 | | |
| Defoaming Agent | KM-72F | | | | | 0.20 | 0.20 |
| Penetrating Agent | 2-ethyl-1,3-hexanediol | 4.0 | 4.0 | 5.0 | 5.0 | 2.0 | 2.0 |
| Antifungal Agent | PROXEL LV | 0.25 | 0.25 | 0.25 | 0.25 | 0.25 | 0.25 |
| Pure Water | | Balance | Balance | Balance | Balance | Balance | Balance |
| Total (% by mass) | | 100.0 | 100.0 | 100.0 | 100.0 | 100.0 | 100.0 |

Notably, the unit of numerical values described in Tables 1 to 3 and 7 to 12 is "% by mass."

Abbreviations described in Tables 1 to 3 and 7 to 12 have meanings as follows.
- Surfactant A: a compound represented by the following General Formula (III) where n = 4, a = 21, and b = 12 (FS-300, manufactured by E. I. du Pont de Nemours and Company)

   CₙF₂ₙ₊₁ -CH₂CH(OH)CH₂-O-(CH₂CH₂O)ₐ-Y' ··· General Formula (III)

   In the General Formula (III), Y' denotes -C_{b}H_{2b+1}.
- Surfactant B: a compound represented by the following General Formula (IV) where m = 3, and n = 13 (UNYDINE DSN-403N, manufactured by DAIKIN INDUSTRIES, LTD)

   CF₃CF₂(CF₂CF₂)ₘ-CH₂CH₂O(CH₂CH₂O)ₙH ··· General Formula (IV)
- Surfactant C: BYK-348 (manufactured by BYK-Chemie GmbH, component: 100% by mass)
- Surfactant D: ECTD-3NEX (manufactured by Nikko Chemicals Co., Ltd.)
- KM-72F: self-emulsifying silicone defoaming agent (manufactured by Shin-Etsu Chemical Co., Ltd., component: 100% by mass)
- PROXEL LV: antifungal agent (manufactured by Nitto Denko Avecia Inc.)

### <Physical properties of ink>

Inks of Ink Preparation Examples 1 to 18 were measured for viscosity, static surface tension, and receding contact angle as follows. Results are shown in Table 4.

As for the static surface tension, 18.0 mN/m to 27.0 mN/m is determined as "A" and less than 18.0 mN/m or more than 27.0 mN/m is determined as "B." Similarly, as for the receding contact angle, 50° or more is determined as "A" and less than 50° is determined as "B." Results are also shown in Table 4.

### <<Viscosity>>

Each ink was measured for the viscosity (mPa·s) at 25°C with R-type viscometer (RC-500, manufactured by Toki Sangyo Co., Ltd) at an appropriate rotation speed of 10 rpm to 100 rpm.

### <<Static surface tension>>

Each ink was measured for the static surface tension (mN/m) at 25°C with an automatic tensiometer (CBVP-Z, manufactured by Kyowa Interface Science Co., Ltd) using a platinum plate method.

### <<Receding contact angle>>

Perfluoroether (weight average molecular weight: 1,000 to 8,000) was vaporized onto a substrate for a nozzle plate formed of SUS316 (thickness: 50 µm) to thereby produce a nozzle plate with a water-repellent film (thickness: 1 nm ± 0.5 nm).

Onto a surface of the nozzle plate, at 25°C, 3 µL of each ink to be evaluated was ejected from a syringe equipped with a syringe needle (internal diameter: 0.37 µm). The ink was measured for the receding contact angle (°) at 25°C with an automatic contact angle meter (OCA200H, manufactured by Data Physics Corporation) using a contraction method.

Notably, a nozzle plate which has been subjected to a water-repellent treatment in the same manner as above described is equipped to a head of an inkjet printer used for the below-described printing evaluation.

**Table 4**

| | Viscosity (mPa·s) | Static Surface Tension | | Receding Contact Angle | |
|---|---|---|---|---|---|
| | | Measurement Value of Static Surface Tension (mN/m) | Evaluation | Measurement Value of Receding Contact Angle (°) | Evaluation |
| Ink Prep. Ex. 1 | 7.72 | 22.5 | A | 61 | A |
| Ink Prep. Ex. 2 | 8.10 | 23.2 | A | 67 | A |
| Ink Prep. Ex. 3 | 7.90 | 22.5 | A | 66 | A |
| Ink Prep. Ex. 4 | 8.06 | 24.7 | A | 67 | A |
| Ink Prep. Ex. 5 | 8.44 | 20.6 | A | 66 | A |
| Ink Prep. Ex. 6 | 8.50 | 20.2 | A | 60 | A |
| Ink Prep. Ex. 7 | 8.56 | 22.1 | A | 52 | A |
| Ink Prep. Ex. 8 | 8.42 | 21.9 | A | 54 | A |
| Ink Prep. Ex. 9 | 8.03 | 20.9 | A | 52 | A |
| Ink Prep. Ex. 10 | 7.99 | 21.3 | A | 52 | A |
| Ink Prep. Ex. 11 | 7.23 | 28.2 | B | 46 | B |
| Ink Prep. Ex. 12 | 7.70 | 27.6 | B | 45 | B |
| Ink Prep. Ex. 13 | 7.60 | 19.7 | A | 44 | B |
| Ink Prep. Ex. 14 | 7.79 | 20.2 | A | 41 | B |
| Ink Prep. Ex. 15 | 8.23 | 16.4 | B | 58 | A |
| Ink Prep. Ex. 16 | 8.27 | 17.0 | B | 53 | A |
| Ink Prep. Ex. 17 | 7.42 | 29.1 | B | 65 | A |
| Ink Prep. Ex. 18 | 7.27 | 28.5 | B | 62 | A |

### (Examples 1 to 10 and Comparative Examples 1 to 26)

Each ink was evaluated as follows.

### <Preparation of printer prior to evaluation>

Under an environment adjusted to 25°C ± 0.5°C and 50% ± 5% RH, an inkjet printer (IPSIO GXE3300, manufactured by Ricoh Company Limited) was used to select a waveform which allowed for the most stable ejection of each of inks having varying viscosities. The selected waveforms were used in all printing evaluations.

The inkjet printer includes a liquid ejection head providing with a pressure chamber in communication with a nozzle opening configured to eject ink droplets and a pressure generating element configured to cause pressure fluctuation in the pressure chamber; and a driving signal generating unit configured to select a drive pulse from a drive waveform including one or more time-series drive pulses and to generate an ejection pulse in accordance with the size of ink droplets. Also, the inkjet printer can form an image on a recording medium by applying the ejection pulse to the pressure generating element to thereby eject ink droplets from the nozzle opening.

In the case where an image is formed on a recording medium by ejecting the ink droplets from the nozzle opening according to an inkjet recording method of the present invention, a drive pulse which is located at the head of the one or more ejecting pulses within one printing unit cycle and which is configured to contract the pressure chamber to thereby eject ink droplets is set to have a waveform element for expanding the pressure chamber to pull the meniscus into the nozzle in the two-step manner (two-step pulling) immediately in front of the drive pulse.

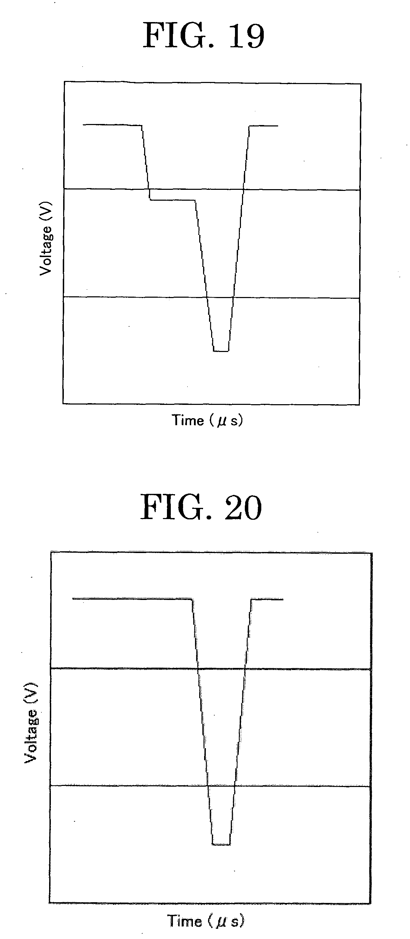

In this case, an ejection waveform including a driving signal for pulling the meniscus in the two-step manner immediately prior to ejection, as illustrated in FIG. 19, is referred to as "Waveform 1," and an ejection waveform including a driving signal for pulling the meniscus in the one-step manner immediately prior to ejection, as illustrated in FIG. 20, is referred to as "Waveform 2." In the case of applying Waveform 1, ejection results of Ink Preparation Examples 1 to 10 and 11 to 18 were determined as Examples 1 to 10 and Comparative Examples 1 to 8, respectively. Similarly, in the case of applying Waveform 2, ejection results of Ink Preparation Examples 1 to 10 and 11 to 18 were determined as Comparative Examples 9 to 18 and Comparative Examples 19 to 26, respectively. Prior to evaluation, the ink was deposited onto a surface of the nozzle plate and wiped off with a wiper blade. This procedure was repeated 3,000 times. Thus, the water-repellent film on the surface of the nozzle was intentionally deteriorated.

### <<Evaluation of ejection stability>>

Printing was performed on MY PAPER (manufactured by Ricoh Japan Corporation) by means of the inkjet printer (IPSIO GXE3300, manufactured by Ricoh Company Limited). As for a printing pattern, a chart in which printing area of each color was 5% relative to a total area of the sheet was used, and each ink of yellow, magenta, cyan, and black was printed at 100%-duty. As for the printing conditions, the recording density was 600 dpi, and the printing was carried out with one-pass printing. Printing samples were produced for two waveforms, i.e., Waveform 1 and Waveform 2. In this evaluation, intermittent printing was performed in the following manner. After continuously printing the chart on 20 sheets, the printer was turned into a resting state for 20 min during which ejection was not performed. This process was repeated 50 times until 1,000 sheets were printed in total. Then, the same chart was printed again, and the resultant was visually observed whether there was any streak, white void, and jetting disturbance in the 5% chart solid area. The evaluation criteria are as follows, where "A" is considered to be a pass and "B" and "C" are considered to be a failure.

### [Evaluation criteria]

A: There was no streak, white void, and jetting disturbance in the solid area.
B: Streaks, white voids, and jetting disturbance were slightly observed in the solid area.
C: Streaks, white voids, and jetting disturbance were observed throughout the solid area.

### <<Uniformity in solid printing area (solid uniformity)>>

Printing was performed on RICOH BUSINESS COAT GLOSS 100 (manufactured by Ricoh Company Limited) by means of the inkjet printer (IPSIO GXE3300, manufactured by Ricoh Company Limited). As for a printing pattern, each ink of yellow, magenta, cyan, and black was printed at 100%-duty. Printing samples were produced for two waveforms, i.e., Waveform 1 and Waveform 2.

The resultant solid images were visually observed and evaluated for uniformity. The evaluation criteria are as follows, where "A" is considered to be a pass and "B" and "C" are considered to be a failure.

### [Evaluation criteria]

A: Almost no spot is visible in the solid area.
B: Some spots are visible in the solid area.
C: Spots are visible throughout the solid area.

Evaluation results are shown in Tables 5 and 6. As for the receding contact angle, 50° or more was determined as "A" and less than 50° was determined as "B." As for the static surface tension, 18.0 mN/m to 27.0 mN/m was determined as "A" and less than 18.0 mN/m or more than 27.0 mN/m was determined as "B."

**Table 5**

| | Evaluation of receding contact angle | Evaluation of static surface tension | | Waveform | Ejection stability | Uniformity in solid area |
|---|---|---|---|---|---|---|
| Ink Prep. Ex. 1 | A | A | Ex. 1 | 1 | A | A |
| Ink Prep. Ex. 2 | A | A | Ex. 2 | 1 | A | A |
| Ink Prep. Ex. 3 | A | A | Ex. 3 | 1 | A | A |
| Ink Prep. Ex. 4 | A | A | Ex. 4 | 1 | A | A |
| Ink Prep. Ex. 5 | A | A | Ex. 5 | 1 | A | A |
| Ink Prep. Ex. 6 | A | A | Ex. 6 | 1 | A | A |
| Ink Prep. Ex. 7 | A | A | Ex. 7 | 1 | A | A |
| Ink Prep. Ex. 8 | A | A | Ex. 8 | 1 | A | A |
| Ink Prep. Ex. 9 | A | A | Ex. 9 | 1 | A | A |
| Ink Prep. Ex. 10 | A | A | Ex. 10 | 1 | A | A |
| Ink Prep. Ex. 11 | B | B | Comp. Ex. 1 | 1 | B | C |
| Ink Prep. Ex. 12 | B | B | Comp. Ex. 2 | 1 | B | C |
| Ink Prep. Ex. 13 | B | A | Comp. Ex. 3 | 1 | B | B |
| Ink Prep. Ex. 14 | B | A | Comp. Ex. 4 | 1 | B | B |
| Ink Prep. Ex. 15 | A | B | Comp. Ex. 5 | 1 | B | B |
| Ink Prep. Ex. 16 | A | B | Comp. Ex. 6 | 1 | B | B |
| Ink Prep. Ex. 17 | A | B | Comp. Ex. 7 | 1 | B | C |
| Ink Prep. Ex. 18 | A | B | Comp. Ex. 8 | 1 | B | C |

**Table 6**

| | Evaluation of receding contact angle | Evaluation of static surface tension | | Waveform | Ejection stability | Uniformity in solid area |
|---|---|---|---|---|---|---|
| Ink Prep. Ex. 1 | A | A | Comp. Ex. 9 | 2 | C | B |
| Ink Prep. Ex. 2 | A | A | Comp. Ex. 10 | 2 | C | B |
| Ink Prep. Ex. 3 | A | A | Comp. Ex. 11 | 2 | C | B |
| Ink Prep. Ex. 4 | A | A | Comp. Ex. 12 | 2 | C | B |
| Ink Prep. Ex. 5 | A | A | Comp. Ex. 13 | 2 | C | B |
| Ink Prep. Ex. 6 | A | A | Comp. Ex. 14 | 2 | C | B |
| Ink Prep. Ex. 7 | A | A | Comp. Ex. 15 | 2 | C | B |
| Ink Prep. Ex. 8 | A | A | Comp. Ex. 16 | 2 | C | B |
| Ink Prep. Ex. 9 | A | A | Comp. Ex. 17 | 2 | C | B |
| Ink Prep. Ex. 10 | A | A | Comp. Ex. 18 | 2 | C | B |
| Ink Prep. Ex. 11 | B | B | Comp. Ex. 19 | 2 | C | C |
| Ink Prep. Ex. 12 | B | B | Comp. Ex. 20 | 2 | C | C |
| Ink Prep. Ex. 13 | B | A | Comp. Ex. 21 | 2 | C | B |
| Ink Prep. Ex. 14 | B | A | Comp. Ex. 22 | 2 | C | B |
| Ink Prep. Ex. 15 | A | B | Comp. Ex. 23 | 2 | C | C |
| Ink Prep. Ex. 16 | A | B | Comp. Ex. 24 | 2 | C | C |
| Ink Prep. Ex. 17 | A | B | Comp. Ex. 25 | 2 | C | C |
| Ink Prep. Ex. 18 | A | B | Comp. Ex. 26 | 2 | C | C |

(1) Evaluation of ejection stability: It can be seen from Examples 1 to 10 that the ejection waveform including the pull pulse for pulling the meniscus in the two-step manner (two-step pulling waveform) can achieve good ejection stability even in the case of using the ink having a low static surface tension and a large receding contact angle.
(2) Evaluation of ejection stability: It can be seen from comparison between Examples 1 to 10 and Comparative Examples 9 to 18 that the ink having a low static surface tension and a large receding contact angle cannot achieve good ejection stability unless the two-step pulling waveform is applied thereto.
(3) Evaluation of ejection stability: It can be seen from comparison between Examples 1 to 10 and Comparative Examples 3 and 4 that the inks of Comparative Examples 3 and 4 having the receding contact angle out of the defined range are poorly improved in ejection stability even when the two-step pulling waveform is applied thereto.
(4) Uniformity in solid area: It can be seen from comparison between Examples 1 to 10 and Comparative Examples 1, 2, and 5 to 8 that the solid area is poor in uniformity in the case where the static surface tension does not fall within the defined range. This is because, in the case where the static surface tension falls within the defined range, the impacted ink rapidly penetrates into a surface of the sheet due to its low static surface tension, so that beading is not easily caused.

### (Ink Preparation Examples 19 to 49)

Ink Preparation Examples 19 to 49 were produced according to formulations described in Tables 7 to 12 using the cyan dispersion, the magenta dispersion, the yellow dispersion, and the black dispersion of Dispersion Production Examples 1 to 4.

Specifically, (1) a water-soluble organic solvent, (2) a surfactant, (3) a foam inhibitor (defoaming agent), (4) a penetrating agent, and (5) ion-exchanged water were mixed in this order according to compositions described in Tables 7 to 12, following by stirring for 30 min. Then, the pigment dispersion prepared in any of Dispersion Production Examples 1 to 4 were added thereto, followed by stirring for 30 min and filtering through a membrane filter (pore diameter: 0.8 µm) to thereby obtain the ink.

**Table 7**

| | | Ink Preparation Example | | | | | |
|---|---|---|---|---|---|---|---|
| | | 19 | 20 | 21 | 22 | 23 | 24 |
| Dispersion Production Example 1 | C | 13.0 | | | | 24.0 | |
| Dispersion Production Example 2 | M | | 17.0 | | | | 33.0 |
| Dispersion Production Example 3 | Y | | | 17.0 | | | |
| Dispersion Production Example 4 | K | | | | 20.0 | | |
| Surfactant | Surfactant A | 0.04 | 0.04 | 0.05 | 0.03 | 0.03 | 0.03 |
| | Surfactant B | | | | | | |
| | Surfactant C | | | | | | |
| | Surfactant D | | | | | | |
| Water-soluble organic solvent | glycerin | 11.0 | 9.0 | 11.0 | 9.0 | 11.0 | 15.0 |
| | 3-methyl-1,3-butanediol | 27.0 | | 27.0 | | | |
| | 1,3-butanediol | | | | | | 28.0 |
| | 1,6-hexanediol | | 32.0 | | 33.0 | 30.0 | |
| | 1,5-pentanediol | | | | | | |
| | 2-pyrrolidone | | | | | | |
| Foam inhibitor | 2,4,7,9-tetramethyldecane-4,7-diol | 0.20 | 0.20 | 0.20 | 0.20 | 0.15 | 0.15 |
| Defoaming agent | KM-72F | | | | | | |
| Penetrating agent | 2-ethyl-1,3-hexanediol | 2.0 | 2.0 | 2.0 | 2.0 | 2.0 | 2.0 |
| Antifungal agent | PROXEL LV | 0.25 | 0.25 | 0.25 | 0.25 | 0.25 | 0.25 |
| pure water | | balance | balance | balance | balance | balance | balance |
| Total (% by mass) | | 100.0 | 100.0 | 100.0 | 100.0 | 100.0 | 100.0 |

**Table 8**

| | | Ink Preparation Example | | | | | |
|---|---|---|---|---|---|---|---|
| | | 25 | 26 | 27 | 28 | 29 | 30 |
| Dispersion Production Example 1 | C | | | 20.0 | | | |
| Dispersion Production Example 2 | M | | | | 28.0 | | |
| Dispersion Production Example 3 | Y | 20.0 | | | | 22.0 | |
| Dispersion Production Example 4 | K | | 33.0 | | | | 29.0 |
| Surfactant | Surfactant A | 0.03 | 0.02 | | | | |
| | Surfactant B | | | | | | |
| | Surfactant C | | | 0.12 | 0.12 | 0.12 | 0.08 |
| | Surfactant D | | | | | | |
| Water-soluble organic solvent | glycerin | 11.0 | 15.0 | 10.0 | 10.0 | 10.0 | 10.0 |
| | 3-methyl-1,3-butanediol | | | | | | 28.0 |
| | 1,3-butanediol | | 28.0 | | | 26.0 | |
| | 1,6-hexanediol | 30.0 | | | 27.0 | | |
| | 1,5-pentanediol | | | 25.0 | | | |
| | 2-pyrrolidone | | | 2.0 | 2.0 | 2.0 | 2.0 |
| Foam inhibitor | 2,4,7,9-tetramethyldecane-4,7-diol | 0.15 | 0.10 | 0.30 | 0.30 | 0.30 | 0.30 |
| Defoaming agent | KM-72F | | | | | | |
| Penetrating agent | 2-ethyl-1,3-hexanediol | 2.0 | 2.0 | 2.0 | 2.0 | 2.0 | 2.0 |
| Antifungal agent | PROXEL LV | 0.25 | 0.25 | 0.20 | 0.20 | 0.25 | 0.25 |
| pure water | | balance | balance | balance | balance | balance | balance |
| Total (% by mass) | | 100.0 | 100.0 | 100.0 | 100.0 | 100.0 | 100.0 |

**Table 9**

| | | Ink Preparation Example | | | |
|---|---|---|---|---|---|
| | | 31 | 32 | 33 | 34 |
| Dispersion Production Example 1 | C | 24.0 | | | |
| Dispersion Production Example 2 | M | | 33.0 | | |
| Dispersion Production Example 3 | Y | | | 24.0 | |
| Dispersion Production Example 4 | K | | | | 33.0 |
| Surfactant | Surfactant A | 0.03 | 0.03 | 0.03 | 0.02 |
| | Surfactant B | | | | |
| | Surfactant C | | | | |
| | Surfactant D | | | | |
| Watersoluble organic solvent | glycerin | 5.0 | 5.0 | 5.0 | 5.0 |
| | 3-methyl-1,3-butanediol | 40.0 | | 40.0 | |
| | 1,3-butanediol | | 38.0 | | 38.0 |
| | 1,6-hexanediol | | | | |
| | 1,5-pentanediol | | | | |
| | 2-pyrrolidone | | | | |
| Foam inhibitor | 2,4,7,9-tetramethyldecane-4,7-diol | 0.50 | 0.50 | 0.50 | 0.50 |
| Defoaming agent | KM-72F | | | | |
| Penetrating agent | 2-ethyl-1,3-hexanediol | 3.0 | 3.0 | 3.0 | 3.0 |
| Antifungal agent | PROXELLV | 0.25 | 0.25 | 0.25 | 0.25 |
| pure water | | balance | balance | balance | balance |
| Total (% by mass) | | 100.0 | 100.0 | 100.0 | 100.0 |

**Table 10**

| | | Ink Preparation Example | | | | | |
|---|---|---|---|---|---|---|---|
| | | 35 | 36 | 37 | 38 | 39 | 40 |
| Dispersion Production Example 1 | C | 22.0 | | | | 40.0 | |
| Dispersion Production Example 2 | M | | 15.0 | | | | 50.0 |
| Dispersion Production Example 3 | Y | | | 20.0 | | | |
| Dispersion Production Example 4 | K | | | | 18.0 | | |
| Surfactant | Surfactant A | | | | | 0.06 | 0.06 |
| | Surfactant B | | | | | | |
| | Surfactant C | | | | | | |
| | Surfactant D | 1.50 | 1.50 | 1.50 | 1.50 | | |
| Watersoluble organic solvent | glycerin | 8.0 | 7.5 | 8.0 | 7.5 | 3.0 | 3.0 |
| | 3-methyl-1,3-butanediol | | 14.0 | 14.0 | | | |
| | 1,3-butanediol | 14.0 | | | | | |
| | 1,6-hexanediol | | | | 14.0 | 20.0 | 20.0 |
| | 1,5-pentanediol | | | 5.0 | | 10.0 | 10.0 |
| | 2-pyrrolidone | | 1.0 | | 1.0 | | |
| Foam inhibitor | 2,4,7,9-tetramethyldecane-4,7-diol | 0.20 | 0.20 | 0.20 | 0.20 | 0.30 | 0.30 |
| Defoaming agent | KM-72F | | | | | | |
| Penetrating agent | 2-ethyl-1,3-hexanediol | 2.0 | 2.0 | 2.0 | 2.0 | 2.0 | 2.0 |
| Antifungal agent | PROXEL LV | 0.25 | 0.25 | 0.25 | 0.25 | 0.25 | 0.25 |
| pure water | | balance | balance | balance | balance | balance | balance |
| Total (% by mass) | | 100.0 | 100.0 | 100.0 | 100.0 | 100.0 | 100.0 |

**Table 11**

| | | Ink Preparation Example | | | | | |
|---|---|---|---|---|---|---|---|
| | | 41 | 42 | 43 | 44 | 45 | 46 |
| Dispersion Production Example 1 | C | | | 24.0 | | | |
| Dispersion Production Example 2 | M | | | | 30.0 | | |
| Dispersion Production Example 3 | Y | 35.0 | | | | 24.0 | |
| Dispersion Production Example 4 | K | | 45.0 | | | | 30.0 |
| Surfactant | Surfactant A | 0.06 | 0.04 | | | | |
| | Surfactant B | | | 1.50 | 1.50 | 1.50 | 1.20 |
| | Surfactant C | | | | | | |
| | Surfactant D | | | | | | |
| Water-soluble organic solvent | glycerin | 3.0 | 3.0 | 20.0 | 20.0 | 25.0 | 15.0 |
| | 3-methyl-1,3-butanediol | | | | | | |
| | 1,3-butanediol | | | 15.0 | 20.0 | 15.0 | 20.0 |
| | 1,6-hexanediol | 20.0 | 20.0 | | | | |
| | 1,5-pentanediol | 10.0 | 10.0 | | | | |
| | 2-pyrrolidone | | | | | | |
| Foam inhibitor | 2,4,7,9-tetramethyldecane-4,7-diol | 0.30 | 0.20 | | | | |
| Defoaming agent | KM-72F | | | 0.20 | 0.20 | 0.20 | 0.20 |
| Penetrating agent | 2-ethyl-1,3-bexanediol | 2.0 | 2.0 | 2.0 | 2.0 | 2.0 | 2.0 |
| Antifungal agent | PROXEL LV | 0.25 | 0.25 | 0.25 | 0.25 | 0.25 | 0.25 |
| pure water | | balance | balance | balance | balance | balance | balance |
| Total (% by mass) | | 100.0 | 100.0 | 100.0 | 100.0 | 100.0 | 100.0 |

**Table 12**

| | | Ink Preparation Example | | |
|---|---|---|---|---|
| | | 47 | 48 | 49 |
| Dispersion Production Example 1 | C | | | |
| Dispersion Production Example 2 | M | | | |
| Dispersion Production Example 3 | Y | | | |
| Dispersion Production Example 4 | K | 20.0 | 20.0 | 45.0 |
| Surfactant | Surfactant A | 0.10 | 0.01 | 0.10 |
| | Surfactant B | 1.0 | | |
| | Surfactant C | | | |
| | Surfactant D | | | |
| Watersoluble organic solvent | glycerin | 9.0 | 9.0 | 3.0 |
| | 3-methyl-1,3-butanediol | | | |
| | 1,3-butanediol | 30.0 | 35.0 | |
| | 1,6-hexanediol | | | 20.0 |
| | 1,5-pentanediol | | | 10.0 |
| | 2-pyrrolidone | | | |
| Foam inhibitor | 2,4,7,9-tetramethyldecane-4,7-diol | 0.50 | 0.10 | 0.50 |
| Defoaming agent | KM-72F | | | |
| Penetrating agent | 2-ethyl-1,3-hexanediol | 2.0 | 2.0 | 2.0 |
| Antifungal agent | PROXEL LV | 0.25 | 0.25 | 0.25 |
| pure water | | balance | balance | balance |
| Total (% by mass) | | 100.0 | 100.0 | 100.0 |

Inks of Ink Preparation Examples 19 to 49 were measured and evaluated for the viscosity, the static surface tension, and the receding contact angle in the same manner as in Ink Preparation Examples 1 to 18. Results are shown in Table 13.

**Table 13**

| | Viscosity (mPa·s) | Static Surface Tension | | Receding Contact Angle | |
|---|---|---|---|---|---|
| | | Measurement Value of Static Surface Tension (mN/m) | Evaluation | Measurement Value of Receding Contact Angle (°) | Evaluation |
| Ink Prep. Ex. 19 | 8.09 | 20.6 | A | 66 | A |
| Ink Prep. Ex. 20 | 7.95 | 20.3 | A | 60 | A |
| Ink Prep. Ex. 21 | 7.98 | 21.4 | A | 65 | A |
| Ink Prep. Ex. 22 | 7.98 | 22.0 | A | 65 | A |
| Ink Prep. Ex. 23 | 7.95 | 21.3 | A | 61 | A |
| Ink Prep. Ex. 24 | 8.08 | 22.1 | A | 67 | A |
| Ink Prep. Ex. 25 | 7.92 | 21.6 | A | 66 | A |
| Ink Prep. Ex. 26 | 7.94 | 23.9 | A | 67 | A |
| Ink Prep. Ex. 27 | 7.26 | 22.3 | A | 54 | A |
| Ink Prep. Ex. 28 | 7.02 | 22.1 | A | 53 | A |
| Ink Prep. Ex. 29 | 7.14 | 22.4 | A | 54 | A |
| Ink Prep. Ex. 30 | 7.23 | 23.0 | A | 56 | A |
| Ink Prep. Ex. 31 | 7.89 | 20.2 | A | 62 | A |
| Ink Prep. Ex. 32 | 8.12 | 20.9 | A | 55 | A |
| Ink Prep. Ex. 33 | 8.21 | 20.6 | A | 58 | A |
| Ink Prep. Ex. 34 | 7.85 | 22.5 | A | 58 | A |
| Ink Prep. Ex. 35 | 6.82 | 29.0 | B | 65 | A |
| Ink Prep. Ex. 36 | 6.90 | 28.4 | B | 62 | A |
| Ink Prep. Ex. 37 | 6.88 | 28.2 | B | 63 | A |
| Ink Prep. Ex. 38 | 6.95 | 28.5 | B | 62 | A |
| Ink Prep. Ex. 39 | 8.34 | 24.2 | A | 44 | B |
| Ink Prep. Ex. 40 | 8.12 | 24.2 | A | 41 | B |
| Ink Prep. Ex. 41 | 8.15 | 24.0 | A | 40 | B |
| Ink Prep. Ex. 42 | 8.24 | 24.3 | A | 47 | B |
| Ink Prep. Ex. 43 | 8.24 | 24.6 | A | 47 | B |
| Ink Prep. Ex. 44 | 8.16 | 24.8 | A | 48 | B |
| Ink Prep. Ex. 45 | 8.05 | 24.7 | A | 43 | B |
| Ink Prep. Ex. 46 | 8.05 | 24.8 | A | 47 | B |
| Ink Prep. Ex. 47 | 7.99 | 17.8 | B | 51 | A |
| Ink Prep. Ex. 48 | 8.07 | 32.2 | B | 70 | A |
| Ink Prep. Ex. 49 | 8.17 | 17.2 | B | 30 | B |

Inks of Ink Preparation Examples 19 to 49 were used to produce Ink sets 1 to 10 including combinations of inks described in the following Table 14.

**Table 14**

| | | | | | |
|---|---|---|---|---|---|
| Ink Set 1 | C | Ink Prep. Ex 19 | Ink Set 6 | C | Ink Prep. Ex. 19 |
| | M | Ink Prep. Ex. 20 | | M | Ink Prep. Ex. 20 |
| | Y | Ink Prep. Ex. 21 | | Y | Ink Prep. Ex. 21 |
| | K | Ink Prep. Ex. 22 | | K | Ink Prep. Ex. 48 |
| Ink Set 2 | C | Ink Prep. Ex. 23 | Ink Set 7 | C | Ink Prep. Ex. 35 |
| | M | Ink Prep. Ex. 24 | | M | Ink Prep. Ex. 36 |
| | Y | Ink Prep. Ex. 25 | | Y | Ink Prep. Ex. 37 |
| | K | Ink Prep. Ex. 26 | | K | Ink Prep. Ex. 38 |
| Ink Set 3 | C | Ink Prep. Ex. 27 | Ink Set 8 | C | Ink Prep. Ex. 39 |
| | M | Ink Prep. Ex. 28 | | M | Ink Prep. Ex. 40 |
| | Y | Ink Prep. Ex. 29 | | Y | Ink Prep. Ex. 41 |
| | K | Ink Prep. Ex. 30 | | K | Ink Prep. Ex. 42 |
| Ink Set 4 | C | Ink Prep. Ex. 31 | Ink Set 9 | C | Ink Prep. Ex. 43 |
| | M | Ink Prep. Ex. 32 | | M | Ink Prep. Ex. 44 |
| | Y | Ink Prep. Ex. 33 | | Y | Ink Prep. Ex. 45 |
| | K | Ink Prep. Ex. 34 | | K | Ink Prep. Ex. 46 |
| Ink Set 5 | C | Ink Prep. Ex. 19 | Ink Set 10 | C | Ink Prep. Ex. 39 |
| | M | Ink Prep. Ex. 20 | | M | Ink Prep. Ex. 40 |
| | Y | Ink Prep. Ex. 21 | | Y | Ink Prep. Ex. 41 |
| | K | Ink Prep. Ex. 47 | | K | Ink Prep. Ex. 49 |

### (Examples 11 to 14 and Comparative Examples 27 to 42)

Ink sets 1 to 10 were evaluated for the ejection stability and the uniformity in solid area in the same manner as in Ink Preparation Examples 1 to 18, and also evaluated for bleed between the black ink and the other color ink.

Compositions of Ink sets are shown in Tables 15 and 16. Evaluation results for the ejection stability, the uniformity in solid area, and the bleed between black ink and other color ink are shown in Table 17. The cases where "Waveform 1" was applied to Ink sets 1 to 4 were determined as Examples 11 to 14 described in Tables 15 to 17. The cases where "Waveform 1" was applied to Ink sets 5 to 10 were determined as Comparative Examples 27 to 32. On the other hand, the cases where "Waveform 2" was applied to Ink sets 1 to 10 were determined as Comparative Examples 33 to 42.

### <Evaluation for bleed between black ink and other color ink>

This evaluation was performed on only Examples 11 to 14 and Comparative Examples 27 to 32.

Printing was performed on MY PAPER (manufactured by Ricoh Japan Corporation) by means of the inkjet printer. As for a printing pattern, each color ink was printed at 100%-duty. As for the printing conditions, the recording density was 600 dpi, and the printing was carried out with one-pass printing. Printing samples were produced for only Waveform 1.

The black ink was used to print characters on the resultant solid image area of each color ink. Bleed (blur) between the black ink and the other color ink was visually observed and evaluated according to the following criteria, where "A" is considered to be a pass.

### [Evaluation criteria]

A: There was no bleed, black characters were clearly recognized, and there was no blur.
B: Bleed was slightly occurred, and black characters were slightly blurred.
C: Bleed was occurred, and black characters were difficult to be recognized.

In Tables 15 and 16, the static surface tension and the receding contact angle of each ink, and the difference in the static surface tension between the black ink and all of other color inks [(Black ink - All of other color inks)] are also described.

As for the receding contact angle, 50° or more was determined as "A" and less than 50° was determined as "B." As for the static surface tension, 18.0 mN/m to 27.0 mN/m was determined as "A" and less than 18.0 mN/m or more than 27.0 mN/m was determined as "B."

As for the difference in the static surface tension between the black ink and all of other color inks [(Black ink - All of other color inks)], 0 mN/m to 4 mN/m was determined as "A" and less than 0 mN/m or more than 4 mN/m was determined as "B."

**Table 15**

| Ink set | Combination of ink | | Static surface tension | | Difference in surface tension between black ink and color ink | |
|---|---|---|---|---|---|---|
| | | | Measurement value of static surface tension (mN/m) | Evaluation | Value of difference (mN/m) | Evaluation |
| Ink set 1 | C | Ink Prep. Ex. 19 | 20.6 | A | 1.4 | A |
| | M | Ink Prep. Ex. 20 | 20.3 | A | 1.7 | |
| | Y | Ink Prep. Ex. 21 | 21.4 | A | 0.6 | |
| | K | Ink Prep. Ex. 22 | 22.0 | A | - | |
| Ink set 2 | C | Ink Prep. Ex. 23 | 21.3 | A | 2.6 | A |
| | M | Ink Prep. Ex. 24 | 22.1 | A | 1.8 | |
| | Y | Ink Prep. Ex. 25 | 21.6 | A | 2.3 | |
| | K | Ink Prep. Ex. 26 | 23.9 | A | - | |
| Ink set 3 | C | Ink Prep. Ex. 27 | 22.3 | A | 0.7 | A |
| | M | Ink Prep. Ex. 28 | 22.1 | A | 0.9 | |
| | Y | Ink Prep. Ex. 29 | 22.4 | A | 0.6 | |
| | K | Ink Prep. Ex. 30 | 23.0 | A | - | |
| Ink set 4 | C | Ink Prep. Ex. 31 | 20.2 | A | 2.3 | A |
| | M | Ink Prep. Ex. 32 | 20.9 | A | 1.6 | |
| | Y | Ink Prep. Ex. 33 | 20.6 | A | 1.9 | |
| | K | Ink Prep. Ex. 34 | 22.5 | A | - | |
| Ink set 5 | C | Ink Prep. Ex. 19 | 20.6 | A | -2.8 | B (because static surface tension is out of the defined range) |
| | M | Ink Prep. Ex. 20 | 20.3 | A | -2.5 | |
| | Y | Ink Prep. Ex. 21 | 21.4 | A | -3.6 | |
| | K | Ink Prep. Ex. 47 | 17.8 | B | - | |
| Ink set 6 | C | Ink Prep. Ex. 19 | 20.6 | A | 11.6 | B |
| | M | Ink Prep. Ex. 20 | 20.3 | A | 11.9 | |
| | Y | Ink Prep. Ex. 21 | 21.4 | A | 10.8 | |
| | K | Ink Prep. Ex. 48 | 32.2 | B | - | |
| Ink set 7 | C | Ink Prep. Ex. 35 | 29.0 | B | -0.5 | B (because static surface tension is out of the defined range) |
| | M | Ink Prep. Ex. 36 | 28.4 | B | 0.1 | |
| | Y | Ink Prep. Ex. 37 | 28.2 | B | 0.3 | |
| | K | Ink Prep. Ex. 38 | 28.5 | B | - | |
| Ink set 8 | C | Ink Prep. Ex. 39 | 24.2 | A | 0.1 | A |
| | M | Ink Prep. Ex. 40 | 24.2 | A | 0.1 | |
| | Y | Ink Prep. Ex. 41 | 24.0 | A | 0.3 | |
| | K | Ink Prep. Ex. 42 | 24.3 | A | - | |
| Ink set 9 | C | Ink Prep. Ex. 43 | 24.6 | A | 0.2 | A |
| | M | Ink Prep. Ex. 44 | 24.8 | A | 0 | |
| | Y | Ink Prep. Ex. 45 | 24.7 | A | 0.1 | |
| | K | Ink Prep. Ex. 46 | 24.8 | A | - | |
| Ink set 10 | C | Ink Prep. Ex. 39 | 24.2 | A | -7 | B |
| | M | Ink Prep. Ex. 40 | 24.2 | A | -7 | |
| | Y | Ink Prep. Ex. 41 | 24.0 | A | -6.8 | |
| | K | Ink Prep. Ex. 49 | 17.2 | B | - | |

**Table 16**

| Ink set | Combination of ink | | Receding contact angle | |
|---|---|---|---|---|
| | | | Measurement value of receding contact angle (°) | Evaluation |
| Ink set 1 | C | Ink Prep. Ex. 19 | 66 | A |
| | M | Ink Prep. Ex. 20 | 60 | A |
| | Y | Ink Prep. Ex. 21 | 65 | A |
| | K | Ink Prep. Ex. 22 | 65 | A |
| Ink set 2 | C | Ink Prep. Ex. 23 | 61 | A |
| | M | Ink Prep. Ex. 24 | 67 | A |
| | Y | Ink Prep. Ex. 25 | 66 | A |
| | K | Ink Prep. Ex. 26 | 67 | A |
| Ink set 3 | C | Ink Prep. Ex. 27 | 54 | A |
| | M | Ink Prep. Ex. 28 | 53 | A |
| | Y | Ink Prep. Ex. 29 | 54 | A |
| | K | Ink Prep. Ex. 30 | 56 | A |
| Ink set 4 | C | Ink Prep. Ex. 31 | 62 | A |
| | M | Ink Prep. Ex. 32 | 55 | A |
| | Y | Ink Prep. Ex. 33 | 58 | A |
| | K | Ink Prep. Ex. 34 | 58 | A |
| Ink set 5 | C | Ink Prep. Ex. 19 | 66 | A |
| | M | Ink Prep. Ex. 20 | 60 | A |
| | Y | Ink Prep. Ex. 21 | 65 | A |
| | K | Ink Prep. Ex. 47 | 51 | A |
| Ink set 6 | C | Ink Prep. Ex. 19 | 66 | A |
| | M | Ink Prep. Ex. 20 | 60 | A |
| | Y | Ink Prep. Ex. 21 | 65 | A |
| | K | Ink Prep. Ex. 48 | 70 | A |
| Ink set 7 | C | Ink Prep. Ex. 35 | 65 | A |
| | M | Ink Prep. Ex. 36 | 62 | A |
| | Y | Ink Prep. Ex. 37 | 63 | A |
| | K | Ink Prep. Ex. 38 | 62 | A |
| Ink set 8 | C | Ink Prep. Ex. 39 | 44 | B |
| | M | Ink Prep. Ex. 40 | 41 | B |
| | Y | Ink Prep. Ex. 41 | 40 | B |
| | K | Ink Prep. Ex. 42 | 47 | B |
| Ink set 9 | C | Ink Prep. Ex. 43 | 47 | B |
| | M | Ink Prep. Ex. 44 | 48 | B |
| | Y | Ink Prep. Ex. 45 | 43 | B |
| | K | Ink Prep. Ex. 46 | 47 | B |
| Ink set 10 | C | Ink Prep. Ex. 39 | 44 | B |
| | M | Ink Prep. Ex. 40 | 41 | B |
| | Y | Ink Prep. Ex. 41 | 40 | B |
| | K | Ink Prep. Ex. 49 | 30 | B |

**Table 17**

| Ink set | | Evaluation through application of waveform 1 | Ejection stability | Uniformity in solid area | Bleed between black and color | Evaluation through application of waveform 2 | Ejection stability | Uniformity in solid area |
|---|---|---|---|---|---|---|---|---|
| Ink set 1 | C | Ex. 11 | A | A | A | Comp. Ex. 33 | C | B |
| | M | | A | A | A | | C | B |
| | Y | | A | A | A | | C | B |
| | K | | A | A | - | | C | B |
| Ink set 2 | C | Ex. 12 | A | A | A | Comp. Ex. 34 | C | B |
| | M | | A | A | A | | C | B |
| | Y | | A | A | A | | C | B |
| | K | | A | A | - | | C | B |
| Ink set 3 | C | Ex. 13 | A | A | A | Comp. Ex. 35 | C | B |
| | M | | A | A | A | | C | B |
| | Y | | A | A | A | | C | B |
| | K | | A | A | - | | C | B |
| Ink set 4 | C | Ex. 14 | A | A | A | Comp. Ex. 36 | C | B |
| | M | | A | A | A | | C | B |
| | Y | | A | A | A | | C | B |
| | K | | A | A | - | | C | B |
| Ink set 5 | C | Comp. Ex. 27 | A | A | C | Comp. Ex. 37 | C | B |
| | M | | A | A | C | | C | B |
| | Y | | A | A | C | | C | B |
| | K | | B | B | - | | C | B |
| Ink set 6 | C | Comp. Ex. 28 | A | A | B | Comp. Ex. 38 | C | B |
| | M | | A | A | B | | C | B |
| | Y | | A | A | B | | C | B |
| | K | | A | C | - | | C | C |
| Ink set 7 | C | Comp. Ex. 29 | B | C | B | Comp. Ex. 39 | C | C |
| | M | | B | C | B | | C | C |
| | Y | | B | C | B | | C | C |
| | K | | B | C | - | | C | C |
| Ink set 8 | C | Comp. Ex. 30 | B | B | A | Comp. Ex. 40 | C | B |
| | M | | B | B | A | | C | B |
| | Y | | B | B | A | | C | B |
| | K | | B | B | - | | C | B |
| Ink set 9 | C | Comp. Ex. 31 | B | B | A | Comp. Ex. 41 | C | B |
| | M | | B | B | A | | C | B |
| | Y | | B | B | A | | C | B |
| | K | | B | B | - | | C | B |
| Ink set 10 | C | Comp. Ex. 32 | B | B | C | Comp. Ex. 42 | C | B |
| | M | | B | B | C | | C | B |
| | Y | | B | B | C | | C | B |
| | K | | B | B | - | | C | B |

Results in Tables 15 to 17 are summarized and discussed as follows.
(1) Evaluation of ejection stability: It can be seen from Examples 11 to 14 that a drive pulse which is configured to contract the pressure chamber to thereby eject ink droplets (pulse which is located at the head of one or more ejecting pulses within one printing unit cycle) having a waveform element for pulling the meniscus into the nozzle in the two-step manner (two-step pulling) can achieve good ejection stability in the inks having the static surface tension and the receding contact angle within the defined range. In addition, Comparative Examples 33 to 36 are poor in ejection stability and result in streaks, white voids, and jetting disturbance throughout the solid area because the ejection waveform including no pulse for pulling the meniscus in the two-step manner (i.e., Waveform 2 including no two-step pulling waveform element) was applied.
(2) Evaluation of ejection stability: It can be seen from comparison between Examples 11 to 14 and Comparative Examples 33 to 36 that the ink having the static surface tension and the receding contact angle within the defined range cannot achieve good ejection stability unless the ejection waveform including a pulse for pulling the meniscus in the two-step manner (i.e., Waveform 1 including a two-step pulling waveform element) is applied thereto.
(3) Evaluation of ejection stability: It can be seen from comparison between Examples 11 to 14 and Comparative Examples 30 and 31 that the inks of Comparative Examples 30 and 31 having the receding contact angle out of the defined range (50° or more) are poorly improved in ejection stability and results in some streaks, white voids, and jetting disturbance even when the pulse for pulling the meniscus in the two-step manner is applied thereto.
(4) Evaluation of uniformity in solid area: It can be seen from comparison between Examples 11 to 14 and Comparative Examples 33 to 36 that good uniformity can be achieved in the solid area by applying the ejection waveform including the pulse for pulling the meniscus in the two-step manner. Meanwhile, in Comparative Examples 33 to 36, there were some spots in the solid area because the ejection waveform including no pulse for pulling the meniscus in the two-step manner (i.e., Waveform 2 including no two-step pulling waveform element) was applied.
(5) Evaluation of uniformity in solid area: It can be seen from comparison between Examples 11 to 14 and Comparative Examples 27 and 28 that in the case of the inks having the static surface tension out of the defined range (18.0 mN/m to 27.0 mN/m), they can achieve good ejection stability, but poor uniformity in the solid area. That is, in the case of Examples 11 to 14 having the static surface tension within the defined rage, no streak, white void, and jetting disturbance was produced. This is because the impacted ink rapidly penetrates into a surface of the sheet due to its low static surface tension, so that beading is not easily caused.
(6) Evaluation of bleed between black ink and other color ink: It can be seen from comparison between Examples 11 to 14 and Comparative Examples 27 to 29 that in the case of the inks having the static surface tension out of the defined range (18.0 mN/m to 27.0 mN/m), bleed and blur were produced. This is because unbalanced static surface tension between the black ink and the other color inks causes black characters to be thinned and blurred during penetration of the ink into the surface of the sheet. It also can be seen that bleed and blur were produced in Comparative Example 29 having the difference in static surface tension out of the defined range [(black ink) - (the other color ink or each of the other color inks)]: 0 mN/m to 4 mN/m] and the receding contact angle out of the defined range (50° or more).

According to an inkjet recording method of the present invention, even when the water-repellent film is gradually deteriorated due to a physical load applied during a maintenance work for keeping a surface of the nozzle plate on which the nozzle constituting the droplet ejection head is formed clean, an ink having a low static surface tension and a large receding contact angle can be ejected stably as ink droplets from the liquid ejection head. In addition, printed matter which is good in image quality with little blur between the black ink and the other color inks (e.g., uniformity in solid area and no bleed between the black ink and the other color inks) can be provided.

### Reference Signs List

- 10: Ink cartridge
- 33: Carriage
- 34, 34a, 34b: Recording head (Liquid ejection head)
- 81: Retaining-recovery mechanism
- 82a: Cap
- 106: Pressurizing liquid chamber
- 508: Printing control section
- 701: Drive waveform generating section
- 702: Data transfer section

## Claims

1. An inkjet recording method, which is performed by an inkjet recording device containing: a nozzle plate (103) provided with a nozzle (104) configured to eject droplets of an ink; a water-repellent film which is provided on a surface of the nozzle plate onto which the ink is ejected; a recording head (34) containing a liquid chamber (106) with which the nozzle (104) is in communication, and a pressure generating unit (121) configured to generate pressure in the liquid chamber (106); and a signal generating unit configured to generate a signal to be applied to the pressure generating unit (121), and which allows the droplets of the ink to eject by the action of the pressure which is generated by the pressure generating unit (121) according to the signal,
wherein the water-repellent film contains a polymer containing a perfluoroalkyl chain,
wherein the ink has a static surface tension of 18.0 mN/m to 27.0 mN/m at 25°C,
wherein the ink has a receding contact angle on the nozzle plate (103) of 50° or more,
wherein the signal has a two-step pull pulse for pulling the ink into the nozzle (104) in a two-step manner within one printing unit cycle, and
wherein the inkjet recording method comprises pulling the ink located in proximity to a nozzle outlet into the nozzle (104) by the action of the two-step pull pulse, to thereby form a meniscus at a predetermined position.

2. The inkjet recording method according to claim 1, wherein, in the signal within one printing unit cycle, the pull pulse is present prior to an ejection pulse for ejecting the ink.

3. The inkjet recording method according to claim 1 or 2, wherein a surface of the nozzle plate (103) contains a water-repellent film (201).

4. The inkjet recording method according to any one of claims 1 to 3, wherein the ink is an ink set containing a black ink and one or more other color inks,
wherein each ink in the ink set has the static surface tension of 18.0 mN/m to 27.0 mN/m at 25°C,
wherein each ink in the ink set has the receding contact angle on the nozzle plate (103) of 50° or more, and
wherein a difference in the static surface tension between the black ink and the other color ink or each of the other color inks (black ink - the other color ink or each of the other color inks) is 0 mN/m to 4 mN/m at 25°C.

5. The inkjet recording method according to any one of claims 1 to 4, wherein the ink contains water, a colorant, a surfactant, and a water-soluble organic solvent.

6. The inkjet recording method according to any one of claims 1 to 5, wherein the ink has a viscosity of 3 mPa·s to 20 mPa·s at 25°C.

7. An inkjet recording device, comprising:
an ink
a nozzle plate (103) provided with a nozzle (104) configured to eject droplets of the ink;
a water-repellent film which is provided on a surface of the nozzle plate onto which the ink is ejected,
a recording head (34) containing a liquid chamber (106) with which the nozzle (104) is in communication, and a pressure generating unit (121) configured to generate pressure in the liquid chamber (106); and
a signal generating unit configured to generate a signal to be applied to the pressure generating unit (121),
wherein the inkjet recording device allows the droplets of the ink to eject by the action of the pressure which is generated by the pressure generating unit (121) according to the signal,
wherein the water-repellent film contains a polymer containing a perfluoroalkyl chain,
wherein the ink has a static surface tension of 18.0 mN/m to 27.0 mN/m at 25°C,
wherein the ink has a receding contact angle on the nozzle plate (103) of 50° or more,
wherein the signal has a two-step pull pulse for pulling the ink into the nozzle (104) in a two-step manner within one printing unit cycle, and
wherein the inkjet recording device allows the ink located in proximity to a nozzle outlet to be pulled into the nozzle (104) by the action of the two-step pull pulse, to thereby form a meniscus at a predetermined position.

8. The inkjet recording device according to claim 7, wherein, in the signal within one printing unit cycle, the pull pulse is present prior to an ejection pulse for ejecting the ink.

9. The inkjet recording device according to claim 7 or 8, wherein a surface of the nozzle plate (103) contains a water-repellent film (201).

10. The inkjet recording device according to any one of claims 7 to 9, wherein the ink is an ink set containing a black ink and one or more other color inks,
wherein each ink in the ink set has the static surface tension of 18.0 mN/m to 27.0 mN/m at 25°C,
wherein each ink in the ink set has the receding contact angle on the nozzle plate (103) of 50° or more, and
wherein a difference in the static surface tension between the black ink and the other color ink or each of the other color inks (black ink - the other color ink or each of the other color inks) is 0 mN/m to 4 mN/m at 25°C.

11. The inkjet recording device according to any one of claims 7 to 10, wherein the ink contains water, a colorant, a surfactant, and a water-soluble organic solvent.

12. The inkjet recording device according to any one of claims 7 to 11, wherein the ink has a viscosity of 3 mPa·s to 20 mPa·s at 25°C.

## Patentansprüche

1. Tintenstrahlaufzeichnungsverfahren, welches durch eine Tintenstrahlaufzeichnungsvorrichtung ausgeführt wird, Folgendes beinhaltend: eine Düsenplatte (103), welche mit einer Düse (104) versehen ist, welche konfiguriert ist, um Tröpfchen einer Tinte auszuwerfen; einen wasserabweisenden Film, welcher an einer Oberfläche der Düsenplatte bereitgestellt ist, auf welche die Tinte ausgeworfen wird; einen Aufzeichnungskopf (34), welcher eine Flüssigkeitskammer (106) enthält, mit welcher die Düse (104) in Kommunikation steht und eine Druckerzeugungseinheit (121), welche konfiguriert ist, um Druck in der Flüssigkeitskammer (106) zu erzeugen; und eine Signalerzeugungseinheit, welche konfiguriert ist, ein an die Druckerzeugungseinheit (121) anzulegendes Signal zu erzeugen und welches die Tröpfchen der Tinte in die Lage versetzt, durch die Einwirkung des Drucks ausgeworfen zu werden, welcher durch die Druckerzeugungseinheit (121) in Einklang mit dem Signal erzeugt wird,
wobei der wasserabweisende Film ein Polymer enthält, welches eine Perfluoralkylkette enthält,
wobei die Tinte eine statische Oberflächenspannung von 18,0 mN/m bis 27,0 mN/m bei 25°C aufweist,
wobei die Tinte einen Rückzugskontaktwinkel an der Düsenplatte (103) von 50° oder darüber aufweist,
wobei das Signal einen zweischrittigen Ziehimpuls zum Ziehen der Tinte in die Düse (104) in zwei Schritten innerhalb eines Druckeinheitszyklus aufweist, und
wobei das Tintenstrahlaufzeichnungsverfahren Ziehen der in der Nähe eines Düsenauslasses befindlichen Tinte in die Düse (104) durch die Einwirkung des zweischrittigen Ziehimpulses beinhaltet, um hierdurch einen Meniskus an einer vorbestimmten Position zu bilden.

2. Tintenstrahlaufzeichnungsverfahren nach Anspruch 1, bei welchem, in dem Signal innerhalb eines Druckeinheitszyklus, der Ziehimpuls vor einem Auswurfimpuls zum Auswerfen der Tinte vorhanden ist.

3. Tintenstrahlaufzeichnungsverfahren nach Anspruch 1 oder 2, bei welchem eine Oberfläche der Düsenplatte (103) einen wasserabweisenden Film (201) enthält.

4. Tintenstrahlaufzeichnungsverfahren nach einem der Ansprüche 1 bis 3, bei welchem die Tinte ein Tinten-Set ist, welches eine schwarze Tinte und eine oder mehrere andersfarbige Tinten enthält,
wobei jede Tinte in dem Tinten-Set die statische Oberflächenspannung von 18,0 mN/m bis 27,0 mN/m bei 25°C aufweist,
wobei jede Tinte in dem Tinten-Set den Rückzugskontaktwinkel an der Düsenplatte (103) von 50° oder darüber aufweist, und
wobei eine Differenz in der statischen Oberflächenspannung zwischen der schwarzen Tinte und der andersfarbigen Tinte oder jeder der andersfarbigen Tinten (schwarze Tinte - die andersfarbige Tinte oder jede der andersfarbigen Tinten) 0 mN/m bis 4 mN/m bei 25°C beträgt.

5. Tintenstrahlaufzeichnungsverfahren nach einem der Ansprüche 1 bis 4, war welchem die Tinte Wasser, einen Farbstoff, einen oberflächenaktiven Stoff und ein wasserlösliches organisches Lösemittel enthält.

6. Tintenstrahlaufzeichnungsverfahren nach einem der Ansprüche 1 bis 5, bei welchem die Tinte eine Viskosität von 3 mPa•s bis 20 mPa•s bei 25°C aufweist.

7. Tintenstrahlaufzeichnungsvorrichtung, Folgendes beinhaltend:
eine Tinte
eine mit einer Düse (104), welche dazu konfiguriert ist, Tröpfchen der Tinte auszuwerfen, versehene Düsenplatte (103);
einen wasserabweisenden Film, welcher an einer Oberfläche der Düsenplatte bereitgestellt ist, auf welche die Tinte ausgeworfen wird,
einen Aufzeichnungskopf (34), welcher eine Flüssigkeitskammer (106) enthält, mit welcher die Düse (104) in Kommunikation steht und eine Druckerzeugungseinheit (121), welche konfiguriert ist, um Druck in der Flüssigkeitskammer (106) zu erzeugen; und
eine Signalerzeugungseinheit, welche konfiguriert ist, um ein an die Druckerzeugungseinheit (121) anzulegendes Signal zu erzeugen,
wobei die Tintenstrahlaufzeichnungsvorrichtung die Tröpfchen der Tinte in die Lage versetzt, durch die Einwirkung des Drucks ausgeworfen zu werden, welcher durch die Druckerzeugungseinheit (121) in Einklang mit dem Signal erzeugt wird,
wobei der wasserabweisende Film ein Polymer enthält, welches eine Perfluoralkylkette enthält,
wobei die Tinte eine statische Oberflächenspannung von 18,0 mN/m bis 27,0 mN/m bei 25°C aufweist,
wobei die Tinte einen Rückzugskontaktwinkel an der Düsenplatte (103) von 50° oder darüber aufweist,
wobei das Signal einen zweischrittigen Ziehimpuls zum Ziehen der Tinte in die Düse (104) in zwei Schritten innerhalb eines Druckeinheitszyklus aufweist, und
wobei die Tintenstrahlaufzeichnungsvorrichtung in der Nähe eines Düsenauslasses befindliche Tinte in die Lage versetzt, in die Düse (104) durch die Einwirkung des zweischrittigen Ziehimpulses gezogen zu werden, um hierdurch einen Meniskus an einer vorbestimmten Position zu bilden.

8. Tintenstrahlaufzeichnungsvorrichtung nach Anspruch 7, bei welcher, in dem Signal innerhalb eines Druckeinheitszyklus, der Ziehimpuls vor einem Auswurfimpuls zum Auswerfen der Tinte vorhanden ist.

9. Tintenstrahlaufzeichnungsvorrichtung nach Anspruch 7 oder 8, bei welchem eine Oberfläche der Düsenplatte (103) einen wasserabweisenden Film (201) enthält.

10. Tintenstrahlaufzeichnungsvorrichtung nach einem der Ansprüche 7 bis 9, bei welchem die Tinte ein Tinten-Set ist, welches eine schwarze Tinte und eine oder mehrere andersfarbige Tinten enthält,
wobei jede Tinte in dem Tinten-Set die statische Oberflächenspannung von 18,0 mN/m bis 27,0 mN/m bei 25°C aufweist,
wobei jede Tinte in dem Tinten-Set den Rückzugskontaktwinkel an der Düsenplatte (103) von 50° oder darüber aufweist, und
wobei eine Differenz in der statischen Oberflächenspannung zwischen der schwarzen Tinte und der andersfarbigen Tinte oder jeder der andersfarbigen Tinten (schwarze Tinte - die andersfarbige Tinte oder jede der andersfarbigen Tinten) 0 mN/m bis 4 mN/m bei 25°C beträgt.

11. Tintenstrahlaufzeichnungsvorrichtung nach einem der Ansprüche 7 bis 10, bei welcher die Tinte Wasser, einen Farbstoff, einen oberflächenaktiven Stoff und ein wasserlösliches organisches Lösemittel enthält.

12. Tintenstrahlaufzeichnungsvorrichtung nach einem der Ansprüche 7 bis 11, bei welcher die Tinte eine Viskosität von 3 mPa·s bis 20 mPa·s bei 25°C aufweist.

## Revendications

1. Procédé d'enregistrement à jet d'encre, qui est réalisé par un dispositif d'enregistrement à jet d'encre contenant : une plaque de buse (103) dotée d'une buse (104) configurée afin d'éjecter des gouttelettes d'une encre ; un film hydrofuge qui est ménagé sur une surface de la plaque de buse sur laquelle l'encre est éjectée ; une tête d'enregistrement (34) contenant une chambre de liquide (106) avec laquelle la buse (104) est en communication, et une unité de génération de pression (121) configurée afin de générer de la pression dans la chambre de liquide (106) ; et une unité de génération de signal configurée afin de générer un signal à appliquer à l'unité de génération de pression (121), et qui permet aux gouttelettes d'encre de s'éjecter par l'action de la pression qui est générée par l'unité de génération de pression (121) selon le signal,
dans lequel le film hydrofuge contient un polymère contenant une chaîne perfluoroalkyle,
dans lequel l'encre présente une tension de surface statique comprise entre 18,0 mN/m et 27,0 mN/m à 25°C,
dans lequel l'encre présente un angle de contact fuyant sur la plaque de buse (103) de 50° ou plus,
dans lequel le signal présente une impulsion de traction en deux étapes permettant d'attirer l'encre dans la buse (104) d'une manière en deux étapes dans un cycle unitaire d'impression, et
dans lequel le procédé d'enregistrement de jet d'encre comprend la traction de l'encre située à proximité d'une sortie de buse dans la buse (104) par l'action de l'impulsion de traction en deux étapes, formant ainsi un ménisque dans une position prédéterminée.

2. Procédé d'enregistrement à jet d'encre selon la revendication 1, dans lequel, dans le signal dans un cycle unitaire d'impression, l'impulsion de traction est présente avant une impulsion d'éjection afin d'éjecter l'encre.

3. Procédé d'enregistrement à jet d'encre selon l'une quelconque des revendications 1 ou 2, dans lequel une surface de la plaque de buse (103) contient un film hydrofuge (201).

4. Procédé d'enregistrement à jet d'encre selon l'une quelconque des revendications 1 à 3, dans lequel l'encre est un kit d'encre contenant une encre noire et une ou plusieurs encres d'autres couleurs,
dans lequel chaque encre dans le kit d'encre présente la tension de surface statique comprise entre 18,0 mN/m et 27,0 mN/m à 25°C,
dans lequel chaque encre dans le kit d'encre présente l'angle de contact fuyant sur la plaque de buse (103) de 50° ou plus, et
dans lequel une différence de la tension de surface statique entre l'encre noire et l'encre de l'autre couleur ou chacune des encres des autres couleurs (encre noire - l'encre de l'autre couleur ou chacune des encres des autres couleurs) est comprise entre 0 mN/m et 4 mN/m à 25°C.

5. Procédé d'enregistrement à jet d'encre selon l'une quelconque des revendications 1 à 4, dans lequel l'encre contient de l'eau, un colorant, un tensioactif, et un solvant organique soluble dans l'eau.

6. Procédé d'enregistrement à jet d'encre selon l'une quelconque des revendications 1 à 5, dans lequel l'encre présente une viscosité comprise entre 3 mPa•s et 20 mPa•s à 25°C.

7. Dispositif d'enregistrement à jet d'encre, comprenant :
une encre
une plaque de buse (103) dotée d'une buse (104) configurée afin d'éjecter des gouttelettes d'encre ;
un film hydrofuge qui est ménagé sur une surface de la plaque de buse sur laquelle l'encre est éjectée,
une tête d'enregistrement (34) contenant une chambre de liquide (106) avec laquelle la buse (104) est en communication, et une unité de génération de pression (121) configurée afin de générer de la pression dans la chambre de liquide (106) ; et
une unité de génération de signal configurée afin de générer un signal à appliquer à l'unité de génération de pression (121),
dans lequel le dispositif d'enregistrement de jet d'encre permet aux gouttelettes de l'encre de s'éjecter par l'action de la pression qui est générée par l'unité de génération de pression (121) selon le signal,
dans lequel le film hydrofuge contient un polymère contenant une chaîne perfluoroalkyle,
dans lequel l'encre présente une tension de surface statique comprise entre 18,0 mN/m et 27,0 mN/m à 25°C,
dans lequel l'encre présente un angle de contact fuyant sur la plaque de buse (103) de 50° ou plus,
dans lequel le signal présente une impulsion de traction en deux étapes permettant d'attirer l'encre dans la buse (104) d'une manière en deux étapes dans un cycle unitaire d'impression, et
dans lequel le dispositif d'enregistrement à jet d'encre permet à l'encre située à proximité d'une buse de sortie d'être attirée dans la buse (104) par l'action de l'impulsion de traction en deux étapes, formant ainsi un ménisque dans une position prédéterminée.

8. Dispositif d'enregistrement à jet d'encre selon la revendication 7, dans lequel, dans le signal, dans un cycle unitaire d'impression, l'impulsion de traction est présente avant une impulsion d'éjection afin d'éjecter l'encre.

9. Dispositif d'enregistrement à jet d'encre selon la revendication 7 ou 8, dans lequel une surface de la plaque de buse (103) contient un film hydrofuge (201).

10. Dispositif d'enregistrement à jet d'encre selon l'une quelconque des revendications 7 à 9, dans lequel l'encre est un kit d'encre contenant une encre noire et une ou plusieurs encres d'autres couleurs,
dans lequel chaque encre dans le kit d'encre présente la tension de surface statique comprise entre 18,0 mN/m et 27,0 mN/m à 25°C,
dans lequel chaque encre dans le kit d'encre présente l'angle de contact fuyant sur la plaque de buse (103) de 50° ou plus, et
dans lequel une différence de la tension de surface statique entre l'encre noire et l'encre de l'autre couleur ou chacune des encres des autres couleurs (encre noire - l'encre de l'autre couleur ou chacune des encres des autres couleurs) est comprise entre 0 mN/m et 4 mN/m à 25°C.

11. Dispositif d'enregistrement à jet d'encre selon l'une quelconque des revendications 7 à 10, dans lequel l'encre contient de l'eau, un colorant, un tensioactif, et un solvant organique soluble dans l'eau.

12. Dispositif d'enregistrement à jet d'encre selon l'une quelconque des revendications 7 à 11, dans lequel l'encre présente une viscosité comprise entre 3 mPa•s et 20 mPa•s à 25°C.
